(19) Europäisches Patentamt / European Patent Office / Office européen des brevets

(11) **EP 4 439 725 A1**

(12) **EUROPEAN PATENT APPLICATION**
published in accordance with Art. 153(4) EPC

(43) Date of publication:
**02.10.2024 Bulletin 2024/40**

(21) Application number: **22898671.7**

(22) Date of filing: **25.11.2022**

(51) International Patent Classification (IPC):
$H01M\ 4/525^{(2010.01)}$  $H01M\ 4/36^{(2006.01)}$
$H01M\ 4/505^{(2010.01)}$  $H01M\ 10/052^{(2010.01)}$
$H01M\ 10/054^{(2010.01)}$  $H01M\ 10/0562^{(2010.01)}$

(52) Cooperative Patent Classification (CPC):
H01M 4/36; H01M 4/505; H01M 4/525;
H01M 10/052; H01M 10/054; H01M 10/0562;
Y02E 60/10

(86) International application number:
**PCT/JP2022/043612**

(87) International publication number:
**WO 2023/095889 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.11.2021 JP 2021192578**

(71) Applicant: **University Public Corporation Osaka Osaka-shi, Osaka 545-0051 (JP)**

(72) Inventors:
- **SAKUDA, Atsushi**
  **Sakai-shi, Osaka 599-8531 (JP)**
- **HAKARI, Takashi**
  **Sakai-shi, Osaka 599-8531 (JP)**
- **TANAKA, Hiroyuki**
  **Sakai-shi, Osaka 599-8531 (JP)**
- **TATSUMISAGO, Masahiro**
  **Sakai-shi, Osaka 599-8531 (JP)**
- **HAYASHI, Akitoshi**
  **Sakai-shi, Osaka 599-8531 (JP)**

(74) Representative: **Murgitroyd & Company**
**165-169 Scotland Street**
**Glasgow G5 8PL (GB)**

(54) **OXIDE-BASED POSITIVE ELECTRODE ACTIVE MATERIAL AND USE OF SAME**

(57) The present invention addresses the problem of providing a novel oxide-based positive electrode active material having exceptional charge/discharge characteristics. The aforementioned problem is solved by an oxide-based positive electrode active material that is a glass ceramic configured to include: Li or Na; at least one transition metal (groups 3 to 12 in periods 4 and 5); and ions selected from the group consisting of sulfate ions, silicate ions, aluminate ions, germanate ions, borate ions, nitrate ions, carbonate ions, and halide ions.

[Figure 5C]

EP 4 439 725 A1

**Description**

TECHNICAL FIELD

The present invention relates to an oxide-based positive electrode active material and the use thereof.

BACKGROUND ART

In recent years, there is an increasing demand for lithium ion secondary batteries for storing electric power in automobiles such as electric vehicles and hybrid vehicles, and power-generating devices such as solar batteries and wind power generators. In addition, from the viewpoint of ensuring safety, all-solid-state batteries not using a liquid but using a solid electrolyte for an electrolyte layer have been actively studied.

In general, the performance of a battery is greatly affected by the performance of a positive electrode. Although oxide-based positive electrodes are used as high-potential positive electrode active materials in lithium ion batteries, further improvement in performance is required. Therefore, the development of a novel oxide-based positive electrode active material is required, and the development is advanced all over the world. As the novel oxide-based positive electrode active material, for example, the applicant of the present application has provided an amorphous oxide-based positive electrode active material (WO 2017/169599: Patent Document 1).

PRIOR ART DOCUMENT

PATENT DOCUMENT

Patent Document 1: WO 2017/169599 A

SUMMARY OF THE INVENTION

PROBLEMS TO BE SOLVED BY THE INVENTION

Although novel oxide-based positive electrode active materials have been developed by the above-described invention and the like, development of a novel oxide-based positive electrode active material having further superior charge-discharge characteristics has been demanded for further improvement in performance.

SOLUTIONS TO THE PROBLEMS

As a result of intensive studies, the inventors of the present invention have found that an oxide-based positive electrode active material that is a glass-ceramic has a characteristic twin structure and exhibits superior charge-discharge characteristics, and have reached the present invention.

Thus, in accordance with the present invention, there is provided an oxide-based positive electrode active material being a glass-ceramic comprising Li or Na, at least one transition metal (Groups 3 to 12 of Periods 4 and 5), and an ionic species selected from the group consisting of sulfate ion, silicate ion, aluminate ion, germanate ion, borate ion, nitrate ion, carbonate ion, and halide ion.

In addition, in accordance with the present invention, there is provided an oxide-based positive electrode active material being a glass-ceramic comprising (i) an amorphous composite containing a transition metal (Groups 3 to 12 of Periods 4 and 5) oxide containing Li or Na, and a lithium salt or a sodium salt of an ortho-oxoacid selected from the group consisting of sulfate ion, silicate ion, aluminate ion, germanate ion, borate ion, nitrate ion, carbonate ion, and halide ion; and (ii) a nano-sized crystalline precipitate.

Furthermore, in accordance with the present invention, there is provided a positive electrode material comprising a particle of the oxide-based positive electrode active material, and a buffer layer covering at least a part of a surface of the particle, the buffer layer containing a metal oxide having an ionic conductivity higher than an ionic conductivity of the positive electrode active material.

Furthermore, in accordance with the present invention, there is provided an electrode comprising the oxide-based positive electrode active material or the positive electrode material.

Furthermore, in accordance with the present invention, there is provided a secondary battery comprising the electrode as a positive electrode.

Furthermore, in accordance with the present invention, there is provided a method for producing the aforementioned oxide-based positive electrode active material, the method comprising a step of crystallizing an amorphous composite containing Li or Na, at least one transition metal, and an ionic species selected from the group consisting of sulfate ion, silicate ion, aluminate ion, germanate ion, borate ion, nitrate ion, carbonate ion, and halide ion.

EFFECTS OF THE INVENTION

In accordance with the present invention, a novel glass-ceramic oxide-based positive electrode active material can be provided.

BRIEF DESCRIPTION OF THE DRAWINGS

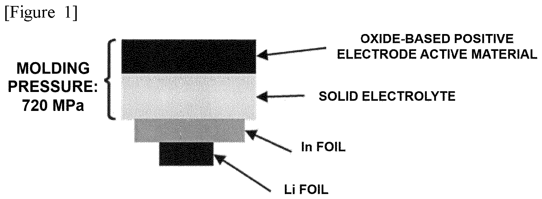

Fig. 1 is a schematic view of an all-solid-state battery for testing.
Fig. 2A is a graph showing the results of a constant current charge-discharge measurement test of an all-solid-state battery prepared using the positive electrode active material of Comparative Example 1.
Fig. 2B is a graph showing the results of a constant current charge-discharge measurement test of an all-solid-state battery prepared using the positive electrode active material of Example 1.
Fig. 2C is a graph showing the results of a constant current charge-discharge measurement test of an all-solid-state battery prepared using the positive electrode active material of Example 2.
Fig. 3 is a graph showing the results of Raman spectrometry of the positive electrode active materials of Comparative Example 1 and Examples 1 and 3 to 5.
Fig. 4 is a graph showing the Nyquist plots of the positive electrode active materials of Comparative Example 1 and Examples 1 and 3 to 5.
Fig. 5A is a graph showing the results of examining the cycle characteristics of an all-solid-state battery produced using the positive electrode active material of Comparative Example 1.
Fig. 5B is a graph showing the results of examining the cycle characteristics of an all-solid-state battery produced using the positive electrode active material of Example 3.
Fig. 5C is a graph showing the results of examining the cycle characteristics of an all-solid-state battery produced using the positive electrode active material of Example 1.
Fig. 5D is a graph showing the results of examining the cycle characteristics of an all-solid-state battery produced using the positive electrode active material of Example 4.
Fig. 5E is a graph showing the results of examining the cycle characteristics of an all-solid-state battery produced using the positive electrode active material of Example 5.
Fig. 6A is a TEM image (BF-STEM) of particles of the positive electrode active material of Example 1.
Fig. 6B is a TEM image (HAADF-STEM) of particles of the positive electrode active material of Example 1.
Fig. 7A is a TEM image (BF-STEM) of particles of the positive electrode active material of Example 1.
Fig. 7B is a TEM image (HAADF-STEM) of particles of the positive electrode active material of Example 1.
Fig. 8A is a TEM image (BF-STEM) of particles of the positive electrode active material of Example 1.
Fig. 8B is a TEM image (HAADF-STEM) of particles of the positive electrode active material of Example 1.
Fig. 9A is a graph showing the results of a constant current charge-discharge measurement test for an all-solid-state battery prepared using the positive electrode active material of Example 6.
Fig. 9B is a graph showing the results of a constant current charge-discharge measurement test for an all-solid-state battery prepared using the positive electrode active material of Example 7.
Fig. 9C is a graph showing the results of a constant current charge-discharge measurement test for an all-solid-state battery prepared using the positive electrode active material of Example 8.
Fig. 9D is a graph showing the results of a constant current charge-discharge measurement test for an all-solid-state battery prepared using the positive electrode active material of Example 9.
Fig. 9E is a graph showing the results of a constant current charge-discharge measurement test for an all-solid-state battery prepared using the positive electrode active material of Example 12.
Fig. 9F is a graph showing the results of a constant current charge-discharge measurement test for an all-solid-state battery prepared using the positive electrode active material of Example 13.
Fig. 10A is a graph showing the results of a constant current charge-discharge measurement test for an all-solid-state battery prepared using the positive electrode active material of Example 14.
Fig. 10B is a graph showing the results of a constant current charge-discharge measurement test for an all-solid-state battery prepared using the positive electrode active material of Example 15.
Fig. 10C is a graph showing the results of a constant current charge-discharge measurement test for an all-solid-state battery prepared using the positive electrode active material of Comparative Example 3.
Fig. 11A is a graph showing the results of a constant current charge-discharge measurement test (the number of cycles: 1 to 5) for an all-solid-state battery with an increased amount of VGCF.

Fig. 11B is a graph showing the results of a constant current charge-discharge measurement test (the number of cycles: 6 to 26) for an all-solid-state battery with an increased amount of VGCF.

Fig. 12A is a graph showing the results of a constant current charge-discharge measurement test for a coin cell using the positive electrode active material sample of Example 6.

Fig. 12B is a graph showing the results of a constant current charge-discharge measurement test for a coin cell using the positive electrode active material sample of Example 10.

Fig. 12C is a graph showing the results of a constant current charge-discharge measurement test for a coin cell using the positive electrode active material sample of Example 11.

Fig. 12D is a graph showing the results of a constant current charge-discharge measurement test for a coin cell using the positive electrode active material sample of Example 16.

Fig. 13 is a graph showing the results of a constant current charge-discharge measurement performed for a coin cell using a positive electrode active material sample of Example 6 at different C rates.

Fig. 14A is a TEM image (BF-STEM) of particles of the positive electrode active material of Example 6.

Fig. 14B is a TEM image (HAADF-STEM) of particles of the positive electrode active material of Example 6.

Fig. 15A is a TEM image (BF-STEM) of particles of the positive electrode active material of Example 6.

Fig. 15B is a TEM image (HAADF-STEM) of particles of the positive electrode active material of Example 6.

Fig. 16A is a TEM image (BF-STEM) of particles of the positive electrode active material of Example 6.

Fig. 16B is a TEM image (HAADF-STEM) of particles of the positive electrode active material of Example 6.

Fig. 17A is a TEM image (BF-STEM) of particles of the positive electrode active material of Example 6 after a charge-discharge test.

Fig. 17B is a TEM image (HAADF-STEM) of particles of the positive electrode active material of Example 6 after a charge-discharge test.

Fig. 18 is a TEM image (HAADF-STEM) of particles of the positive electrode active material of Example 6 after a charge-discharge test.

Fig. 19A is a TEM image (BF-STEM) of particles of the positive electrode active material of Example 6.

Fig. 19B is a TEM image (HAADF-STEM) of particles of the positive electrode active material of Example 6.

Fig. 20A is an EDS image with respect to O of particles of the positive electrode active material of Example 6.

Fig. 20B is an EDS image with respect to C of particles of the positive electrode active material of Example 6.

Fig. 20C is an EDS image with respect to S of particles of the positive electrode active material of Example 6.

Fig. 20D is an EDS image with respect to Al of particles of the positive electrode active material of Example 6.

Fig. 20E is an EDS image with respect to Mn of particles of the positive electrode active material of Example 6.

Fig. 20F is an EDS image with respect to Co of particles of the positive electrode active material of Example 6.

Fig. 21A is a TEM image (HAADF-STEM) of pellets of the positive electrode active material of Example 6.

Fig. 21B is an EDS image with respect to O of pellets of the positive electrode active material of Example 6.

Fig. 21C is an EDS image with respect to P of pellet of the positive electrode active material of Example 6.

Fig. 21D is an EDS image with respect to S of pellets of the positive electrode active material of Example 6.

Fig. 21E is an EDS image with respect to Cl of pellets of the positive electrode active material of Example 6.

Fig. 21F is an EDS image with respect to Mn of pellet of the positive electrode active material of Example 6.

Fig. 21G is an EDS image with respect to Co of pellets of the positive electrode active material of Example 6.

Fig. 22A is a graph showing an EDX spectrum of the positive electrode active material of Example 6.

Fig. 22B is a graph showing an EDX spectrum of a pellet after a charge-discharge test of the positive electrode active material of Example 6.

DETAILED DESCRIPTION

In the present description, "a to b" (a and b are specific values) means "a or more and b or less" unless otherwise specified.

(Oxide-based positive electrode active material being glass-ceramic)

From a first point of view, the oxide-based positive electrode active material being a glass-ceramic (hereinafter, also referred to as glass-ceramic positive electrode active material) of the present invention comprises Li or Na, at least one transition metal, and an ionic species selected from the group consisting of sulfate ion, silicate ion, aluminate ion, germanate ion, borate ion, nitrate ion, carbonate ion, and halide ion.

In the present description, the "transition metal" refers to any element belonging to Group 3 to 12 of Periods 4 and Period 5 of the periodic table.

The oxide-based positive electrode active material being a glass-ceramic of the present invention may also be configured to contain Li or Na, at least one transition metal, an ionic species selected from the group consisting of sulfate ion, silicate ion, aluminate ion, germanate ion, borate ion, nitrate ion, carbonate ion, and halide ion, and an oxygen atom not constituting the ionic species.

The oxide-based positive electrode active material being a glass-ceramic of the present invention may also be configured to contain (i) a transition metal oxide composed of an alkali metal selected from Li and Na, a transition metal, and an oxygen atom, and (ii) an ionic species selected from the group consisting of sulfate ion, silicate ion, aluminate ion, germanate ion, borate ion, nitrate ion, carbonate ion, and halide ion.

From a second point of view, the oxide-based positive electrode active material being a glass-ceramic of the present invention may also be configured to contain (i) an amorphous composite containing a transition metal oxide containing Li or Na and a lithium salt or a sodium salt of an ortho-oxoacid selected from the group consisting of sulfate ion, silicate ion, aluminate ion, germanate ion, borate ion, nitrate ion, carbonate ion, and halide ion, and (ii) a nano-sized crystalline precipitate.

In the present description, the glass-ceramic refers to any material having a glass (amorphous) phase and a crystalline precipitate dispersed in the glass phase. The glass-ceramic can be formed, for example, by heating glass at a temperature equal to or higher than its glass transition point to microcrystallize (at least a part of) the material. The glass transition point can be measured by, for example, differential thermal analysis (DTA).

The fact that a positive electrode active material is a glass-ceramic can be confirmed, for example, by observing that a plurality of crystalline precipitates are contained in a glass phase using a transmission electron microscope (TEM). Alternatively, it can also be confirmed by observing an amorphous positive electrode active material before heating and a positive electrode active material after heating with TEM, and finding that the ratio of the area where it can be determined that a crystalline substance is precipitated in the image of the positive electrode active material before heating is 5% or less, whereas the ratio of the area where it can be determined that a crystalline substance is precipitated in the image of the positive electrode active material after heating is 20% or more. The ratio of the area where it can be determined that a crystalline substance is precipitated in the image of the positive electrode active material after heating is preferably 30% or more, and more preferably 40% or more.

The fact that a positive electrode active material is a glass-ceramic can also be confirmed by performing X-ray diffraction (XRD) using a $CuK\alpha$ ray on the positive electrode active material and subjecting the detected diffraction peaks to crystal structure analysis by a Rietveld method. Specifically, when the degree of crystallinity determined by performing X-ray diffraction on the positive electrode active material, analyzing the detected diffraction peaks to divide the positive electrode active material into a crystalline part and an amorphous part, and applying the peak areas of the respective parts to the following formula is 20% or more, it may be determined that the positive electrode active material is a glass-ceramic.

Degree of crystallinity (%) = peak area of crystalline part/(peak area of crystalline part + peak area of amorphous part) $\times$ 100

The proportion of the degree of crystallinity of the positive electrode active material calculated by analysis of X-ray diffraction is preferably 20% or more and 80% or less, more preferably 25% or more and 75% or less, and more preferably 30% or more and 70% or less.

Alternatively, a positive electrode active material may be determined to be a glass-ceramic by confirming that there are a broad peak or a halo pattern due to a glass phase and a sharp peak due to a crystalline precipitate (both peaks may overlap). Here, the broad peak means that all the peaks of $2\theta$ in XRD using a $CuK\alpha$ ray have a half value width (full width at half maximum, in degrees) of 0.5 or more, preferably 1.0 or more, and the sharp peak means that the full width at half maximum is 0.3 or less, preferably 0.2 or less.

The crystals contained in the glass-ceramic positive electrode active material of the present invention is not particularly limited in size, and examples thereof include micro-sized or smaller crystalline precipitates and nano-sized crystalline precipitates, but the glass-ceramic positive electrode active material of the present invention preferably contains nano-sized crystalline precipitates. With respect to the size of the crystalline precipitates, micro-size refers to 1 to 1000 $\mu$m, and nano-size refers to 1 nm or more and less than 1 $\mu$m.

The size of the crystalline precipitate may be, for example, in the range of 1 nm to 10 $\mu$m, and is preferably in the range of 1 nm to 1000 nm, more preferably in the range of 1 nm to 700 nm, and more preferably in the range of 1 nm to 500 nm.

Here, the size of the crystalline precipitates refers to the average of the sizes of crystalline precipitates measured as follows: namely, a TEM image of the glass-ceramic positive electrode active material is taken such that at least 30 crystalline precipitates are contained, and the sizes of the crystalline precipitates are measured. The size of a crystalline precipitate is the diameter of an equivalent circle having the same area as the area of a part surrounded by a contour of one crystalline precipitate.

Alternatively, the crystalline precipitates contained in the glass-ceramic positive electrode active material of the present invention are preferably mainly nano-sized crystalline precipitates. The term "mainly" means that nano-sized crystalline precipitates account for 80% or more among the crystalline precipitates measured by the above measurement method.

The crystalline precipitates contained in the glass-ceramic positive electrode active material of the present invention preferably include nano-sized crystalline precipitates in an amount of 90% or more, more preferably include nano-sized crystalline precipitates in an amount of 95% or more, more preferably include nano-sized crystalline precipitates in an amount of 98% or more, more preferably include nano-sized crystalline precipitates in an amount of 99% or more, and more preferably, all of the crystalline precipitates are nano-sized crystalline precipitates.

The crystalline precipitates contained in the glass-ceramic positive electrode active material of the present invention more preferably mainly include crystalline precipitates having a size of 500 nm or less, more preferably mainly include crystalline precipitates having a size of 200 nm or less, more preferably mainly include crystalline precipitates having a size of 100 nm or less, more preferably mainly include crystalline precipitates having a size of 70 nm or less, and more preferably mainly include crystalline precipitates having a size of 50 nm or less. The expression "mainly include crystalline precipitates having a size of 500 nm or less" means that 50% or more of the volume of the crystal phase contained in the glass-ceramic positive electrode active material of the present invention is accounted for by crystalline precipitates having a size of 500 nm or less. The proportion of the crystalline precipitates having a size of 500 nm or less is preferably 70% or more, and more preferably 90% or more.

The crystalline precipitate is not particularly limited as long as constituent components of a glassy substance are contained, but is preferably a complex oxide containing Li or Na, at least one transition metal (Group 3 to 12 of Periods 4 and 5), and an ionic species selected from the group consisting of sulfate ion, silicate ion, aluminate ion, germanate ion, borate ion, nitrate ion, carbonate ion, and halide ion.

The crystalline precipitate may have a twin structure. The crystalline precipitate may include a crystallite having a layered structure and a crystal grain having a twin structure. Here, the crystal grain having a twin structure refers to any crystal grain in which single crystals are joined with regularity, and generally refers to a crystal grain having two or more single crystals having a symmetry plane. The fact that a crystalline precipitate includes a crystallite having a layered structure and a crystal grain having a twin structure can be confirmed by observing the crystalline precipitate using, for example, a transmission electron microscope (TEM) or a scanning electron microscope (SEM).

The size of the crystal grain having a twin structure is not particularly limited. The size of the crystal grain may be, for example, 1 $\mu$m or less, and is preferably 500 nm or less, more preferably 300 nm or less, more preferably 200 nm or less, more preferably 100 nm or less, and more preferably 50 nm or less. In addition, it is preferable that the size of the crystallite having a layered structure is in the range of 1 nm to 200 nm and the size of the crystal grain having a twin structure is in the range of 1 nm to 100 nm.

The glass phase or the amorphous phase refers to a phase that does not exhibit clear crystallinity. For example, the phase that does not exhibit clear crystallinity may refer to a state in which no peak is confirmed in X-ray diffraction (XRD) using a CuK$\alpha$ ray for a positive electrode active material, or all peaks of $2\theta$ in XRD have a half value width (full width at half maximum) of 0.5 or more, or may refer to a state in which all the peaks have a half value width (full width at half maximum) of 1.0 or more, or may refer to a state in which all the peaks have a half value width (full width at half maximum) of 2.0 or more.

The transition metal is not particularly limited as long as it is selected from Groups 3 to 12 of Periods 4 and 5 in the periodic table, but the transition metal is preferably selected from among Co, Ni, Mn, Fe, Ti, V, Cr, Cu, Zn, Zr, Nb, Mo, Ru, Pd, and Cd, more preferably selected from among Co, Ni, Mn, Fe, Ti, V, Nb, and Mo, and more preferably selected from among Co, Ni, Mn, and Fe.

In a specific embodiment, the glass-ceramic positive electrode active material may include a transition metal oxide (alkali-transition metal oxide) composed of an alkali metal selected from Li or Na, at least one transition metal, and an oxygen atom.

The alkali-transition metal oxide is not particularly limited as long as it is configured to contain an alkali metal selected from Li or Na and a transition metal (Groups 3 to 12 of Periods 4 and 5). Examples of the alkali-transition metal oxide include $LiCoO_2$, $LiMnO_3$, $LiMnO_2$, $LiNiO_2$, $Li_2TiO_3$, $LiFeO_2$, $LiCrO_2$, $Li_2CuO_2$, $LiCuO_2$, $LiMoO_2$, $Li_2RuO_3$, $Li_3NbO_4$, $LiMn_2O_4$, $Li_2ZrO_3$, $Li_2ZnO_2$, $LiPdO_2$, $Li(Ni, Co, Mn)O_2$, $Li(Ni, Mn)O_4$, $NaCoO_2$, $NaMnO_3$, $NaMnO_2$, $NaNiO_2$, $Na_2TiO_3$, $NaFeO_2$, $NaCrO_2$, $Na_2CuO_2$, $NaCuO_2$, $NaMoO_2$, $Na_2RuO_3$, $Na_3NbO_4$, $NaMn_2O_4$, $Na_2ZrO_3$, $Na_2ZnO_2$, $NaPdO_2$, $Na(Ni, Co, Mn)O_2$, and $Na(Ni, Mn)O_4$. These may be contained singly, or two or more thereof may be contained.

In a specific embodiment, the glass-ceramic positive electrode active material may include an alkali metal salt composed of an alkali metal selected from Li or Na and an ionic species selected from the group consisting of sulfate ion, silicate ion, aluminate ion, germanate ion, borate ion, nitrate ion, carbonate ion, and halide ion. As the ionic species, it is preferable that at least sulfate ion is contained, it is more preferable that sulfate ion is mainly contained, and it is more preferable that only sulfate ion is contained. The phrase "sulfate ion is mainly contained" means that sulfate ion is contained in an amount of more than 50% in molar ratio based on the ionic species contained in the glass-ceramic positive electrode active material.

The alkali metal salt can be represented by, for example, the following formula (I) or (II).

$$\alpha x \beta y O z \qquad (I)$$

wherein $\alpha$ is Li or Na, $\beta$ is one or more selected from among P, S, B, C, Si, Al, Ge, and N, x is 1 or more, y is 1 or more, z is 1 or more, and x, y, and z are stoichiometrically possible values.

$$\alpha X \qquad (II)$$

wherein $\alpha$ is Li or Na, and X is selected from among F, Cl, Br, and I.

Examples of the alkali metal salt include a compound composed of an alkali metal and an ortho acid or a halogen. Examples of the alkali metal salt include $Li_2SO_4$, $Li_3BO_3$, $Li_4BO_5$, $LiBO_2$, $Li_2CO_3$, $Li_4SiO_4$, $Li_6Si_2O_7$, $Li_2SiO_3$, $LiAlO_3$, $Li_4Al_2O_5$, $LiAlO_2$, $Li_4GeO_4$, $Li_6Ge_2O_7$, $Li_2GeO_3$, $LiNO_3$, LiX (X = F, Cl, Br, I), $Na_2SO_4$, $Na_3BO_3$, $Na_4BO_5$, $NaBO_2$, $Na_2CO_3$, $Na_4SiO_4$, $Na_6Si_2O_7$, $Na_2SiO_3$, $NaAlO_3$, $Na_4Al_2O_5$, $NaAlO_2$, $Na_4GeO_4$, $Na_6Ge_2O_7$, $Na_2GeO_3$, $NaNO_3$ or Ge), and NaX (X = F, Cl, Br, I). These may be contained singly, or two or more thereof may be contained.

The glass-ceramic positive electrode active material preferably contains at least one alkali-transition metal oxide and at least one alkali metal salt. The combination of the alkali-transition metal oxide and the alkali metal salt is not particularly limited, but a combination containing at least the alkali-transition metal oxide and $Li_2SO_4$ is preferable. Examples of such a combination include a combination of $LiCoO_2$ and $Li_2SO_4$, a combination of $Li_2MnO_3$ and $Li_2SO_4$, and a combination of $LiCoO_2$, $Li_2MnO_3$ and $Li_2SO_4$. Among these, the combination of $LiCoO_2$ and $Li_2SO_4$ or the combination of $LiCoO_2$, $LiMnO_3$ and $Li_2SO_4$ is more preferable.

When the glass-ceramic positive electrode active material contains at least one alkali-transition metal oxide and at least one alkali metal salt, the mixing ratio of the alkali-transition metal oxide and the alkali metal salt is not particularly limited. The ratio of the number of all atoms of the transition metal element constituting each alkali-transition metal oxide to the number of all atoms of the central element constituting each alkali metal salt and not being oxygen (for example, a principal element constituting an oxoacid or a halogen element) is preferably a ratio of (the number of all atoms of the transition metal element constituting each alkali-transition metal oxide) : (the number of all atoms of the central element constituting each alkali metal salt and not being oxygen) = 50 : 50 to 95 : 5, more preferably is a ratio of 60 : 40 to 90 : 10, and more preferably is a ratio of 70 : 30 to 85 : 15.

In a specific embodiment, the glass-ceramic positive electrode active material may contain a transition metal oxide containing no alkali metal, or an oxide of a metal other than transition metals or an oxide of a metalloid.

Examples of the oxide of a transition metal include CoO, $Co_2O_3$, $Co_3O_4$, NiO, $Ni_2O_3$, FeO, $Fe_2O_3$, $Fe_3O_4$, $Cr_2O_3$, $CrO_2$, $CrO_3$, CuO, $Cu_2O$, $MoO_3$, $MoO_2$, $RuO_2$, $RuO_4$, SnO, $SnO_2$, $SnO_3$, ZnO, $V_2O_3$, $V_2O_5$, $TiO_2$, $Nb_2O_5$, $ZrO_2$, $Nb_2O_5$, CdO, and $Mn_2O_3$.

Examples of the oxide of a metal other than transition metals include $SnO_2$, SnO, $Al_2O_3$, PbO, BeO, SrO, BaO, $Bi_2O_3$, $Ga_2O_3$, $Ta_2O_5$, $K_2O$, $Na_2O$, CaO, and MgO.

Examples of the metalloid oxide include $B_2O_3$, $SiO_2$, $GeO_2$, $As_2O_3$, $As_2O_5$, $Sb_2O_3$, and $Sb_2O_5$.

The content of the transition metal oxide or the oxide of a metal other than transition metals or the metalloid oxide is not particularly limited, but each may be 35% by mass or less, 30% by mass or less, 25% by mass or less, 20% by mass or less, 18% by mass or less, 15% by mass or less, 10% by mass or less, 9% by mass or less, 8% by mass or less, 7% by mass or less, 6% by mass or less, 5% by mass or less, 4% by mass or less, 3% by mass or less, 2% by mass or less, or 1% by mass or less based on the total mass of the glass-ceramic positive electrode active material. Among these, the content is preferably 20% by mass or less, and preferably 10% by mass or less. In addition, the total content of the transition metal oxide and the oxide of a metal other than transition metals or the oxide of a metalloid is preferably 35% by mass or less based on the total mass of the glass-ceramic positive electrode active material.

The glass-ceramic positive electrode active material of the present invention preferably contains an oxygen atom not constituting an ionic species. Examples of a compound containing an oxygen atom not constituting an ionic species include the above-described alkali-transition metal oxide, the oxide of a transition metal, the oxide of a metal other than transition metals or the metalloid oxide.

In a specific embodiment, the glass-ceramic positive electrode active material is preferably a complex oxide containing Li or Na, at least one transition metal, and an ionic species selected from the group consisting of sulfate ion, silicate ion, aluminate ion, germanate ion, borate ion, nitrate ion, carbonate ion, and halide ion.

The complex oxide may either one containing substantially only an oxygen atom constituting an ionic species as an oxygen atom, or one containing an oxygen atom not constituting an ionic species, but the complex oxide preferably contains a compound containing an oxygen atom not constituting an ionic species. The expression "containing substantially only an oxygen atom constituting an ionic species as an oxygen atom" means that a compound not containing an oxygen atom constituting an ionic species is not intentionally added, and the complex oxide may contain a compound containing an oxygen atom as an impurity of the complex oxide. The content of the compound containing an oxygen atom as an impurity is preferably 1% by mass or less, and more preferably 0.5% by mass or less in the complex oxide.

Examples of the compound in which an oxygen atom constitutes an ionic species include the above-described alkali metal salt, and it is preferable that the compound contains at least sulfate ion.

Examples of the compound containing an oxygen atom not constituting an ionic species include the above-described alkali-transition metal oxide, the transition metal oxide containing no alkali metal, or the oxide of a metal other than transition metals or the oxide of a metalloid. The compound containing an oxygen atom not constituting an ionic species preferably includes at least an alkali-transition metal oxide.

Examples of the complex oxide of the compound containing an oxygen atom not constituting an ionic species include a complex oxide composed of an alkali-transition metal oxide and an alkali metal salt, a complex oxide composed of a transition metal oxide containing no alkali metal and an alkali metal salt, and a complex oxide composed of an oxide of a metal other than transition metals or an oxide of a metalloid and an alkali metal salt. The complex oxide composed of an alkali-transition metal oxide and an alkali metal salt is preferable, and a complex oxide containing an alkali-transition metal oxide and at least sulfate ion as an ionic species is more preferable. Examples of such a complex oxide include $LiCoO_2$-$Li_2SO_4$ and $LiCoO_2$-$Li_2MnO_3$-$Li_2SO_4$.

When the complex oxide is a combination of an alkali-transition metal oxide and an alkali metal salt, the ratio of the number of all atoms of the transition metal element constituting each alkali-transition metal oxide to the number of all atoms of the central element constituting each alkali metal salt and not being oxygen (for example, a principal element constituting an oxoacid or a halogen element) is preferably a ratio of (the number of all atoms of the transition metal element constituting each alkali-transition metal oxide) : (the number of all atoms of the central element constituting each alkali metal salt and not being oxygen) = 50 : 50 to 95 : 5, more preferably is a ratio of 60 : 40 to 90 : 10, and more preferably is a ratio of 70 : 30 to 85 : 15.

One embodiment of the glass-ceramic positive electrode active material of the present invention is a glass-ceramic comprising (i) an amorphous composite containing a transition metal oxide containing Li or Na, and a lithium salt or a sodium salt of an ortho-oxoacid selected from the group consisting of sulfate ion, silicate ion, aluminate ion, germanate ion, borate ion, nitrate ion, carbonate ion, and halide ion; and (ii) a nano-sized crystalline precipitate.

At this time, the crystalline precipitate may be a complex oxide containing one component, preferably two components, among: Li or Na; at least one transition metal; and at least one ionic species selected from the group consisting of sulfate ion, silicate ion, aluminate ion, germanate ion, borate ion, nitrate ion, carbonate ion, and halide ion, but the crystalline precipitate preferably is a complex oxide containing all of the three components.

The lithium salt or the sodium salt of the ortho-oxoacid is not particularly limited, but preferably includes at least a lithium salt or a sodium salt of sulfuric acid, more preferably includes mainly a lithium salt or a sodium salt of sulfuric acid, and more preferably is composed only of a lithium salt or a sodium salt of sulfuric acid.

The content of the lithium salt or the sodium salt of the ortho-oxoacid in the complex oxide is not particularly limited, but is preferably 1% by mass or more and 50% by mass or less, more preferably 1% by mass or more and 45% by mass or less, more preferably 5% by mass or more and 45% by mass or less, more preferably 5% by mass or more and 40% by mass or less, more preferably 5% by mass or more and 30% by mass or less, more preferably 5% by mass or more and 27.5% by mass or less, and more preferably 10% by mass or more and 25% by mass or less based on the complex oxide.

The form of the glass-ceramic positive electrode active material of the present invention is not particularly limited, and may be a particle form, a pellet form, or a sheet form.

When the glass-ceramic positive electrode active material of the present invention is in a particle form (hereinafter, the material in this form is also simply referred to as glass-ceramic positive electrode active material particle), the volume average particle size ($D_{50}$) of the glass-ceramic positive electrode active material particles is in the range of 0.1 to 1000 $\mu$m. In the present invention, the volume average particle size is based on a volume-based particle size distribution measured using a laser diffraction/scattering type particle size distribution analyzer. Examples of the laser diffraction/scattering type particle size distribution analyzer include "SALD-2100" manufactured by Shimadzu Corporation, "AEROTRAC LDSA-SPR" manufactured by MicrotracBEL Corp., and "Mastersizer 3000" manufactured by Malvern Panalytical Ltd. The volume average particle size ($D_{50}$) is also called volume median diameter, and is a particle size at which the cumulative frequency in a volume-based particle size distribution is 50%. That is, particles having a particle size equal to or less than the value of $D_{50}$ account for 50% of the total volume.

The range of the volume average particle size ($D_{50}$) of the glass-ceramic positive electrode active material particles may be, for example, a range represented by a combination of any upper limit value and lower limit value selected from among values of 0.1, 0.2, 0.5, 1, 1.5, 2, 2.5, 3, 4, 5, 6, 7, 8, 9, 10, 11, 12, 13, 14, 15, 16, 17, 20, 25, 30, 35, 40, 45, 50, 55, 60, 65, 70, 75, 80, 85, 90, 95, 99, 100, 110, 120, 125, 150, 175, 200, 225, 250, 300, 350, 400, 450, 499, 500, 550, 600, 650, 700, 750, 800, 850, 900, 950, 975, 990, 999, or 1000 $\mu$m. The volume average particle size ($D_{50}$) of the glass-ceramic positive electrode active material particles is preferably in the range of 0.1 to 100 $\mu$m, more preferably in the range of 0.2 to 20 $\mu$m, and more preferably in the range of 0.5 to 10 $\mu$m.

The glass-ceramic positive electrode active material particles contain crystalline precipitates dispersed in a glass phase. The glass-ceramic positive electrode active material particle refers to a substance in which a material constituting a glass phase or a part of a component is precipitated as a crystal, and the glass-ceramic positive electrode active material particle preferably contains a plurality of crystalline precipitates.

The element distribution in the glass-ceramic positive electrode active material particle may be uniform or biased in the particle. For example, the concentration of sulfate ion in the glass-ceramic positive electrode active material particle may be higher on the particle surface than that in the central portion. The concentration of the lithium salt or the sodium salt of sulfuric acid on the particle surface may be, for example, 1.1 times or more higher, more specifically 1.2 times or more higher, more specifically 1.3 times or more higher, and more specifically 1.5 times or more higher than that in the central portion.

The bias of the element distribution in the particle can be examined by, for example, TEM and energy dispersive X-ray analysis (EDS) or X-ray photoelectron spectroscopy (XPS).

An all-solid-state secondary battery using an electrode produced using the above-described glass-ceramic positive electrode active material has superior charge-discharge characteristics. Therefore, the glass-ceramic positive electrode active material of the present invention can be suitably used as a material for a positive electrode of an all-solid-state secondary battery.

(Method for producing glass-ceramic positive electrode active material)

The present invention provides a method for producing a glass-ceramic oxide-based positive electrode active material, comprising a step of crystallizing a part of an amorphous composite containing Li or Na, at least one transition metal, and an ionic species selected from the group consisting of phosphate ion, sulfate ion, silicate ion, aluminate ion, germanate ion, borate ion, nitrate ion, carbonate ion, and halide ion.

Examples of the step of crystallization include heating the amorphous composite, and it is preferable to heat the amorphous composite at a temperature equal to or higher than the glass transition point. The heat treatment temperature may be appropriately set according to the composition of the amorphous composite to be used, and may be, for example, a range represented by a combination of any upper limit and lower limit selected from among 100°C, 120°C, 140°C, 160°C, 180°C, 200°C, 220°C, 240°C, 250°C, 260°C, 280°C, 300°C, 320°C, 340°C, 350°C, 360°C, 380°C, 400°C, 420°C, 450°C, 500°C, 550°C, 600°C, 650°C, 700°C, 750°C, 800°C, 850°C, 900°C, 950°C, 999°C, and 1000°C. Among them, the temperature is preferably in the range of 200°C to 1000°C, and more preferably in the range of 200°C to 700°C.

The heat treatment time is not particularly limited, and may be a range represented by a combination of any upper limit value and lower limit value selected from among, for example, 0.01 minutes, 0.1 minutes, 1 minute, 2 minutes, 5 minutes, 10 minutes, 15 minutes, 20 minutes, 25 minutes, 30 minutes, 35 minutes, 40 minutes, 45 minutes, 50 minutes, 55 minutes, 1 hour, 1.5 hours, 2 hours, 3 hours, 4 hours, 5 hours, 6 hours, 7 hours, 8 hours, 9 hours, 10 hours, 11 hours, 12 hours, 15 hours, 18 hours, 20 hours, 24 hours, and 48 hours. Among them, the time is preferably in the range of 0.1 minutes to 10 hours, more preferably in the range of 1 minute to 5 hours, and still more preferably in the range of 1 minute to 2 hours.

The heat treatment may be performed by directly heating a container or the like containing the sample from room temperature, or by adding the sample to a container heated in advance. Alternatively, the sample may be passed through a heating device heated in advance.

The heated glass-ceramic positive electrode active material may be gently cooled as it is to normal temperature, or may be rapidly cooled using an arbitrary cooling device.

In the treatment step, the treatment is preferably performed under an inert atmosphere (for example, an argon atmosphere) and under an environment in which the moisture concentration is 10,000 ppm or less and the oxygen concentration is 10,000 ppm or less.

The fact that the amorphous composite has become the glass-ceramic can be confirmed in the same manner as the method for confirming that the positive electrode active material is a glass-ceramic described above. Alternatively, on the basis of the fact that in X-ray diffraction (XRD) using a CuKα ray, a peak that was not observed with the amorphous composite (more specifically, a peak having a half value width of less than 1.0) has been confirmed, the amorphous composite can be determined to have become a glass-ceramic.

(Method for producing amorphous composite)

The method for producing a glass-ceramic positive electrode active material of the present invention may comprise a step of producing an amorphous composite. That is, the present invention provides a method for producing a glass-ceramic oxide-based positive electrode active material, comprising a step of producing an amorphous composite containing Li or Na, at least one transition metal, and an ionic species selected from the group consisting of phosphate ion, sulfate ion, silicate ion, aluminate ion, germanate ion, borate ion, nitrate ion, carbonate ion, and halide ion, and a step of crystallizing a part of the amorphous composite.

The step of producing the amorphous composite is not particularly limited as long as the amorphous composite raw materials can be mixed and amorphized, and examples thereof include a mechanochemical treatment step. Alternatively, the production step may be performed by a vapor phase method such as a physical vapor deposition (PVD) method or a chemical vapor deposition (CVD) method, a liquid phase method, or a method of thermally decomposing an ammonium salt or the like. The mechanochemical treatment step may be either a wet method or a dry method.

The treatment device for mechanochemical treatment is not particularly limited as long as it can mix while applying mechanical energy, and for example, a ball mill, a bead mill, a jet mill, a vibration mill, a disk mill, a turbo mill, mechanofusion, or the like can be used. The ball mill is preferable because large mechanical energy can be obtained. Among ball mills, a planetary ball mill is preferable because the pot rotates and the platen revolves in the direction opposite to the direction of the rotation, so that high impact energy can be efficiently generated. The treatment conditions for the mechanochemical treatment may be appropriately set according to the treatment apparatus to be used. For example, when a planetary ball mill is used, for example, the treatment conditions may include a ball diameter of 2 to 10 mm, a rotation speed of 50 to 600 rotations/min, a treatment time of 0.1 to 100 hours, and 1 to 100 kWh/1 kg of raw materials. Among them, the treatment time is preferably 1 hour or more, and more preferably 10 hours or more.

The raw materials of the amorphous composite are, for example, a lithium salt or a sodium salt of a transition metal oxide containing Li or Na and an ortho-oxoacid (for example, those described above). A halide of Li or Na or a transition metal oxide not containing Li or Na may also be used.

The treatment step is preferably performed in an environment with a low moisture concentration, and more preferably performed in an environment with a moisture concentration of 10,000 ppm or less and an oxygen concentration of 10,000 ppm or less in an inert atmosphere (for example, an argon atmosphere). When the raw materials contain crystal water, the raw materials are preferably heat-treated in advance.

(Positive electrode material)

The present invention provides a positive electrode material comprising the above-described glass-ceramic oxide-based positive electrode active material particle and a buffer layer covering at least a part of a surface of the particle, the buffer layer containing a metal oxide having an ionic conductivity higher than an ionic conductivity of the positive electrode active material.

Thanks to forming the buffer layer on the glass-ceramic oxide-based positive electrode active material particle, it is possible to inhibit the formation of a high resistance layer during charge and discharge.

The metal oxide having an ionic conductivity higher than the ionic conductivity of the positive electrode active material is not particularly limited, but can be represented by, for example, the following formula (III).

$$\alpha x \beta y O z \qquad (III)$$

wherein $\alpha$ is Li or Na, $\beta$ is selected from among Nb, Ti, P, C, B, Si, Ge, Al, and Zr, x is 1 or more, y is 1 or more, z is 1 or more, and x, y, and z are stoichiometrically possible values.

Examples of the compound represented by the formula (III) include an alkali metal-niobium oxide (e.g., $LiNbO_3$, $Li_3NbO_4$, $LiNbsOs$, $Li_8Nb_2O_9$, $NaNbO_3$, $Na_3NbO_4$, $NaNb_3O_8$, or $Na_8Nb_2O_9$), $LiTiO_3$, $LiPO_3$, $Li_4P_2O_7$, $Li_3PO_4$, $Li_2CO_3$, $Li_3BO_3$, $Li_4SiO_4$, $Li_4GeO_4$, $Li_2ZrO_3$, $NaTiO_3$, $Na_3PO_4$, $Na_3BO_3$, $Na_4SiO_4$, $Na_4GeO_4$, and $Na_2ZrO_3$. The metal oxide may be a complex oxide of these metal oxides. Examples of the complex oxide include $Li_3BO_3$-$Li_4SiO_4$, $Li_3PO_4$-$Li_4SiO_4$, $Li_3PO_4$-$Li_4GeO_4$, $Na_3BO_3$-$Na_4SiO_4$, $Na_3PO_4$-$Na_4SiO_4$, and $Na_3PO_4$-$Na_4GeO_4$.

The metal oxide may have a crystal structure or may be amorphous.

The buffer layer may cover a part of the glass-ceramic oxide-based positive electrode active material particle or may cover the entire particle. The buffer layer may cover 30% or more, of the surface of the glass-ceramic oxide-based positive electrode active material particle, or may cover 40% or more, or may cover 50% or more, or may cover 60% or more, or may cover 70% or more, or may cover 80% or more, or may cover 90% or more, or may cover 95% or more, or may cover 99% or more, and the surface may be covered completely with the buffer layer. The rate of covering the particle can be measured using, for example, a transmission electron microscope or X-ray photoelectron spectrometry (XPS).

The thickness of the buffer layer is not particularly limited, and may be, for example, in the range of 0.1 nm to 100 nm. In particular, it is preferably in the range of 1 nm to 20 nm. The thickness of the buffer layer can be measured using, for example, a transmission electron microscope. The buffer layer may be uniform or biased, but preferably is uniform in thickness.

The method of forming the buffer layer is not particularly limited as long as the buffer layer can be formed on the glass-ceramic oxide-based positive electrode active material particle. For example, a gas phase method such as a PVD method or a CVD method, a liquid phase method such as electroplating or an application method, covering by spray atomization, or the like can be used. Examples of the PVD method include a vacuum vapor deposition method and a sputtering method.

In order to form the buffer layer, the metal oxide may optionally be suspended in a solvent. At this time, the solvent is not particularly limited, and may be appropriately selected according to the metal oxide, but the solvent is preferably selected from among solvents that do not cause a side reaction with the metal oxide.

(Electrode composite)

The present invention provides an electrode composite comprising the glass-ceramic oxide-based positive electrode active material of the present invention or the positive electrode material of the present invention.

The electrode composite may be either a positive electrode composite or a negative electrode composite, but is preferably a positive electrode composite.

The electrode composite of the present invention may be composed of only the glass-ceramic oxide-based positive electrode active material of the present invention or the positive electrode material of the present invention, or may be mixed with a binder, a conductive material, an electrolyte, or the like. The proportion of the glass-ceramic oxide-based positive electrode active material of the present invention or the positive electrode material of the present invention accounting for in the positive electrode composite may be, for example, 70% by mass or more, 85% by mass or more, or 100% by mass. However, the use of a solid electrolyte of a conductive material is not denied, and these may be used, as necessary.

The binder is not particularly limited, and examples thereof include a fluorine-based polymer, a polyolefin-based polymer, a poly (meth)acryl-based polymer, a polyvinyl-based polymer, a polystyrene-based polymer, a polyimide-based polymer, a polyester-based polymer, a cellulose-based polymer, and a polyacrylonitrile-based polymer. Specific examples thereof include polyvinylidene fluoride (PVDF), polytetrafluoroethylene, polyvinyl alcohol, polyvinyl acetate, polymethyl methacrylate, polyethylene, polypropylene, styrene-butadiene rubber, acrylonitrile-butadiene rubber, polyimide, polyamide, carboxymethyl cellulose, polyacrylonitrile, and copolymers thereof. The binder may be either one type of binder or a combination of a plurality of conductive materials. When the glass-ceramic oxide-based positive electrode active material of the present invention, the positive electrode material of the present invention, or the like is mixed using a solvent, the solvent is preferably a solvent that does not cause a side reaction with the glass-ceramic oxide-based positive electrode active material of the present invention.

The range of the content of the binder in the electrode composite may be a range represented by a combination of any upper limit value and lower limit value selected from among 30% by mass, 25% by mass, 20% by mass, 15% by mass, 10% by mass, 8% by mass, 6% by mass, 5% by mass, 4% by mass, 3% by mass, 2.5% by mass, 2% by mass, 1.5% by mass, 1% by mass, 0.75% by mass, 0.5% by mass, 0.4% by mass, 0.3% by mass, 0.2% by mass, and 0.1% by mass. Among them, the content is preferably 25% by mass or less, more preferably 20% by mass or less, more preferably 10% by mass or less, and more preferably 5% by mass or less.

Conductive materials mainly include a carbon-based conductive material and a metal-based conductive material. Examples of the carbon-based conductive material include nanocarbon and fibrous carbon (for example, vapor grown carbon fiber (VGCF) or carbon nanofiber), and more specifically include natural graphite, artificial graphite, acetylene black, Ketjen black, and furnace black. Examples of the metal-based conductive material include metals such as Cu, Ni, Al, Ag, Au, Pt, Zn, and Mn, or alloys thereof. Among them, a carbon-based conductive material is preferably used. The conductive material may be either one type of conductive material or a combination of a plurality of conductive materials.

The range of the content of the conductive material in the electrode composite may be a range represented by a combination of any upper limit value and lower limit value selected from among 30% by mass, 25% by mass, 20% by mass, 15% by mass, 10% by mass, 8% by mass, 6% by mass, 5% by mass, 4% by mass, 3% by mass, 2.5% by mass, 2% by mass, 1.5% by mass, 1% by mass, 0.75% by mass, 0.5% by mass, 0.4% by mass, 0.3% by mass, 0.2% by mass, and 0.1% by mass. Among them, the content is preferably 30% by mass or less, more preferably 25% by mass or less, more preferably 20% by mass or less, more preferably 15% by mass or less, and more preferably 0.5% by mass or more and 10% by mass or less.

The solid electrolyte contained in the electrode composite is not particularly limited, and a solid electrolyte used in the production of the secondary battery described later can be used. Among them, an argyrodite-type sulfide solid electrolyte is preferably used.

The range of the content of the solid electrolyte in the electrode composite may be a range represented by a combination of any upper limit value and lower limit value selected from among 50% by mass, 45% by mass, 40% by mass, 35% by mass, 30% by mass, 25% by mass, 20% by mass, 15% by mass, 10% by mass, 8% by mass, 6% by mass, 5% by mass, 4% by mass, 3% by mass, 2.5% by mass, 2% by mass, 1.5% by mass, 1% by mass, 0.75% by mass, 0.5% by mass, 0.4% by mass, 0.3% by mass, 0.2% by mass, and 0.1% by mass. Among them, the content is preferably 10% by mass or more and 50% by mass or less, more preferably 10% by mass or more and 40% by mass or less, and more preferably 20% by mass or more and 40% by mass or less.

The sum of the contents of the binder, the conductive material, and the solid electrolyte in the electrode composite is not particularly limited, but is preferably 60% by mass or less, more preferably 50% by mass or less, and more preferably 40% by mass or less.

An electrode active material may be added to the electrode composite of the present invention, as necessary. When the electrode composite is a positive electrode composite, examples of the electrode active material include $LiCoO_2$, $LiMnO_2$, $LiVO_2$, $LiCrO_2$, $LiNiO_2$, $Li_2NiMn_3O_8$, $LiNi_{1/3}Co_{1/3}Mn_{1/3}O_2$, $FeS$, $Ti_2S$, $LiFeO_2$, $Li_3V_2(PO_4)_3$, or $LiMn_2O_4$. These electrode active materials may be used singly or two or more thereof may be used in combination.

The electrode composite may be coated with a material such as a compound represented by the above formula (III), a Li ion or Na ion conductive oxide, $Al_2O_3$ or $NiS$. These electrodes may be used singly or two or more thereof may be used in combination.

The electrode composite can be obtained in the form of a pellet or a sheet by, for example, mixing an electrode active material, and optionally a binder, a conductive material, an electrolyte, or the like, and pressing the resulting mixture.

(Electrode)

The present invention also provides an electrode in which an electrode composite (preferably a positive electrode composite) and a current collector are combined. The electrode composite to be combined with the current collector is the electrode composite of the present invention.

The material, form, and so on of the current collector are not particularly limited as long as the current collector can be combined with the electrode composite of the present invention and can function as a current collector. The form of the current collector may be a form like a uniform alloy plate or a form having a hole. Further, the current collector may be in the form of a foil, a sheet, or a film.

Examples of the material of the current collector include Al, Ni, Ti, Mo, Ru, Pd, stainless steel, and steel. The current collector may be coated with any of Au, Al, and C in addition to the material described above. The thickness of the coating is not particularly limited, but is preferably 10 nm to 2 $\mu$m. It is also preferred that the coating is uniform in thickness.

The coating method is not particularly limited as long as it can coat the current collector, but for example, the coating can be formed by vapor deposition on the surface using a sputter coater.

The electrode of the present invention may be produced by combining members formed as an electrode composite and a current collector, respectively, or may be produced by directly forming an electrode composite on a current collector. When the electrode composite is directly formed, an electrode active material may be applied to the surface of the current collector using a known method.

(Secondary battery)

The present invention provides a secondary battery comprising the electrode composite or the electrode of the present invention. The secondary battery may be a general lithium ion secondary battery or a general sodium ion secondary battery, or an all-solid-state secondary battery. The electrode of the present invention can be used for both a positive electrode and a negative electrode.

When the electrode of the present invention is used as a positive electrode, the negative electrode is not particularly limited as long as Li or Na can be given and taken as movable ions with the positive electrode during charge and discharge. As such a negative electrode, one having a low oxidation-reduction potential is preferable, and one having an average charge-discharge potential of 1.6 V or less based on the oxidation-reduction potential of Li is more preferable. When the electrode of the present invention is used as a negative electrode, the positive electrode is not particularly limited as long as Li or Na can be given and taken as movable ions with the negative electrode during charge and discharge. As such a positive electrode, one having a high oxidation-reduction potential is preferable, and one having an average charge-discharge potential of 3.5 V or more based on the oxidation-reduction potential of Li is more preferable. The electrode active material to be used for the positive electrode and the negative electrode may be composed of the above-described electrode active material or the like. The positive electrode and the negative electrode that can be combined with the electrode of the present invention may be composed of only an electrode active material, or may be mixed with the above-described binder, the above-described conductive material, a solid electrolyte described later, or the like.

Electrolyte layers to be used in secondary batteries can be roughly classified into a type of being mainly composed of an electrolytic solution or a gel electrolyte and a type of being composed of a solid electrolyte.

(1) Nonaqueous electrolyte layer

The nonaqueous electrolyte layer to be used in the present invention can be composed of a mixture of a known electrolyte and a nonaqueous solvent.

Examples of the electrolyte include $LiClO_4$, $LiPF_6$, $LiBF_4$, $LiCF_3SO_3$, $LiAsF_6$, $LiB(C_6H_5)_4$, $LiCl$, $LiBr$, $CH_3SO_3Li$, $CF_3SO_3Li$, $LiN(SO_2CF_3)_2$, $LiN(SO_2C_2F_5)_2$, $LiC(SO_2CF_3)_3$, or $LiN(SO_3CF_3)_2$.

The nonaqueous solvent is not particularly limited, and examples thereof include carbonates, ethers, ketones, sulfolane-based compounds, lactones, nitriles, chlorinated hydrocarbons, amines, esters, amides, and phosphate compounds. Typical examples thereof include 1,2-dimethoxyethane, 1,2-diethoxyethane, tetrahydrofuran, 2-methyltetrahydrofuran, ethylene carbonate, vinylene carbonate, methyl formate, dimethyl sulfoxide, propylene carbonate, acetonitrile, $\gamma$-butyrolactone, dimethylformamide, dimethyl carbonate, diethyl carbonate, sulfolane, ethyl methyl carbonate, 1,4-dioxane, 4-methyl-2-pentanone, 1,3-dioxolane, 4-methyl-1,3-dioxolane, diethyl ether, sulfolane, methyl sulfolane, propionitrile, benzonitrile, butyronitrile, valeronitrile, 1,2-dichloroethane, trimethyl phosphate, and triethyl phosphate. These may be used singly or two or more of them may be used in combination. In addition, a gel electrolyte composed of such a nonaqueous solvent can also be used.

(2) Solid electrolyte layer

The solid electrolyte constituting the solid electrolyte layer is not particularly limited, and one that can be used for an all-solid-state secondary battery can be used. The solid electrolyte is composed of, for example, a sulfide-based solid electrolyte, an oxide-based solid electrolyte, or a halide solid electrolyte.

Examples of the sulfide-based solid electrolyte include $Li_2S$-$P_2S_5$, $Li_2S$-$P_2S_5$-$LiI$, $Li_2S$-$P_2S_5$-$LiI$-$LiBr$, $Li_2S$-$P_2S_5$-$Li_2O$, $Li_2S$-$P_2S_5$-$Li_2O$-$LiI$, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$B_2S_3$, $Li_2S$-$P_2S_5$-$GeS_2$, $LiI$-$Li_2S$-$P_2O_5$, $LiI$-$Li_3PO_4$-$P_2S_5$, $Li_2S$-$P_2S_5$, $Li_{10}GeP_2S_{12}$, $Li_{9.54}Si_{1.74}P_{1.44}S_{11.7}Cl_{0.3}$, $Li_7P_3S_{11}$, $Li_3PS_4$, $Li_{3.25}P_{0.75}S_4$, $Li_6PS_5I$, and $Li_{6+y}PS_{5-y}Z_{1+y}$ (Z = Cl or Br, y = 0 to 0.5). These sulfide-based solid electrolytes may be used singly or two or more thereof may be used in combination.

Examples of the oxide-based solid electrolyte material include $Li_2O$-$B_2O_3$-$P_2O_3$, $Li_2O$-$SiO_2$, $Li_2O$-$P_2O_5$, $Li_2O$-$B_2O_3$-$SiO_2$, $Li_5La_3Ta_2O_{12}$, $Li_7La_3Zr_2O_{12}$, $Li_6BaLa_2Ta_2O_{12}$, $Li_{3.6}Si_{0.6}P_{0.4}O_4$, or $Li_3BO_3$-$Li_2SO_4$-$Li_2CO_3$. These oxide-based solid electrolytes may be used singly, or two or more thereof may be used in combination.

Examples of the halide-based solid electrolyte include $Li_6YCl_6$, and $Li_3YBr_6$.

Among them, a sulfide-based solid electrolyte is preferable, and an argyrodite-type sulfide solid electrolyte such as $Li_{6+y}PS_{5-y}Z_{1+y}$ (Z = Cl or Br, y = 0 to 0.5) is more preferable.

In addition to the solid electrolyte material, the solid electrolyte layer may contain other components used in all-solid-state secondary batteries. Examples thereof include a metal oxide such as P, As, Ti, Fe, Zn or Bi, and a binder such as polyvinylidene fluoride, polytetrafluoroethylene, polyvinyl alcohol, polyvinyl acetate, polymethyl methacrylate, or polyethylene.

The solid electrolyte may be crystalline, glassy, or glass-ceramic-like.

The solid electrolyte can be formed into a solid electrolyte layer by, for example, pressing it into a prescribed thickness. The pressure of the press may be selected from pressures in the range of 50 to 2000 MPa.

(Method for producing secondary battery)

The present invention also provides a method for producing a secondary battery using the electrode and the electrode composite of the present invention.

(I) Lithium secondary battery or sodium secondary battery

In the case of producing a lithium secondary battery or a sodium secondary battery using an electrolytic solution, the lithium ion secondary battery or the sodium ion secondary battery can be obtained by, for example, inserting a laminate of the electrode of the present invention, a separator, and a negative electrode for a lithium ion secondary battery or a sodium ion secondary battery into a battery can, and pouring a mixture of an electrolyte and a non-aqueous solvent into the battery can.

As the separator, a microporous polymer film is preferably used. Specifically, a separator made of a polyolefin polymer such as nylon, cellulose acetate, nitrocellulose, polysulfone, polyacrylonitrile, polyvinylidene fluoride, polypropylene, polyethylene, or polybutene can be used. A separator in which an electrolytic solution is contained in a gel electrolyte or an inorganic filler can also be used.

The positive electrode, the separator, and the negative electrode may be laminated or may be in a wound form. The electrode composite of the present invention may be used instead of the positive electrode and the negative electrode.

(II) all-solid-state battery

The all-solid-state battery can be obtained, for example, by laminating and pressing the positive electrode of the present invention, a solid electrolyte layer, a negative electrode, and a current collector to obtain a cell, and fixing the cell to a container.

Specific embodiments will be described below.

Item 1

An oxide-based positive electrode active material being a glass-ceramic comprising Li or Na, at least one transition metal (Groups 3 to 12 of Periods 4 and 5), and an ionic species selected from the group consisting of sulfate ion, silicate ion, aluminate ion, germanate ion, borate ion, nitrate ion, carbonate ion, and halide ion.

Item 2

The oxide-based positive electrode active material according to item 1, wherein the glass-ceramic is a complex oxide containing the Li or Na, the at least one transition metal, and the ionic species.

Item 3

The oxide-based positive electrode active material according to item 1 or 2, wherein the glass-ceramic contains a nano-sized crystalline precipitate.

Item 4

An oxide-based positive electrode active material being a glass-ceramic comprising (i) an amorphous composite containing a transition metal (Groups 3 to 12 of Periods 4 and 5) oxide containing Li or Na, and a lithium salt or a sodium salt of an ortho-oxoacid selected from the group consisting of sulfate ion, silicate ion, aluminate ion, germanate ion, borate ion, nitrate ion, carbonate ion, and halide ion; and (ii) a nano-sized crystalline precipitate.

Item 5

The oxide-based positive electrode active material according to item 4, wherein the crystalline precipitate is a complex oxide containing:

Li or Na;
at least one transition metal (Groups 3 to 12 of Periods 4 and 5); and
an ionic species selected from the group consisting of sulfate ion, silicate ion, aluminate ion, germanate ion, borate ion, nitrate ion, carbonate ion, and halide ion.

Item 6

The oxide-based positive electrode active material according to any one of items 1 to 5, comprising Li.

Item 7

The oxide-based positive electrode active material according to any one of items 4 to 6, wherein the lithium salt or the sodium salt of the ortho-oxoacid is contained in an amount of 5% by mass or more and 25% by mass or less based on the complex oxide.

Item 8

The oxide-based positive electrode active material according to any one of items 1 to 7, wherein the at least one transition metal is selected from the group consisting of Co, Ni, Mn, and Fe.

Item 9

The oxide-based positive electrode active material according to item 1, 2 or 3 or any one of items 6 to 8 depending from item 1, 2 or 3 wherein the ionic species is sulfate ion, or according to item 4 or 5 or any one of items 6 to 8 depending from item 4 or 5 wherein the lithium salt or the sodium salt of the ortho-oxoacid is a lithium salt or a sodium salt of sulfuric acid.

Item 10

The oxide-based positive electrode active material according to item 7, wherein the oxide-based positive electrode active material is in a form of particles, and
a concentration of the sulfate ion or the lithium salt or the sodium salt of sulfuric acid is higher on a surface than in a central portion.

Item 11

The oxide-based positive electrode active material according to any one of items 3 to 10, wherein the crystalline precipitate has a twin structure.

Item 12

The oxide-based positive electrode active material according to item 11, wherein a crystal grain size is 50 nm or less in the twin structure.

Item 13

The oxide-based positive electrode active material according to any one of items 1 to 12, wherein the oxide-based positive electrode active material is for an all-solid-state secondary battery.

Item 14

A positive electrode material comprising:

a particle of the oxide-based positive electrode active material according to any one of items 1 to 13; and
a buffer layer covering at least a part of a surface of the particle, the buffer layer containing a metal oxide having an ionic conductivity higher than an ionic conductivity of the positive electrode active material.

Item 15

An electrode comprising the oxide-based positive electrode active material according to any one of items 1 to 13 or the positive electrode material according to item 14.

Item 16

A secondary battery comprising the electrode according to item 15 as a positive electrode.

Item 17

The secondary battery according to item 16, wherein the secondary battery is an all-solid-state secondary battery.

Item 18

The secondary battery according to item 17, comprising an argyrodite-type sulfide electrolyte as a solid electrolyte.

Item 19

A method for producing the oxide-based positive electrode active material according to any one of items 1 to 13, the method comprising a step of crystallizing a part of an amorphous composite containing Li or Na, at least one transition metal, and an ionic species selected from the group consisting of sulfate ion, silicate ion, aluminate ion, germanate ion, borate ion, nitrate ion, carbonate ion, and halide ion.

EXAMPLES

Hereinafter, the present invention is described more specifically by way of examples and comparative examples, but the present invention is not limited at all by these. In the following examples and comparative examples, $LiCoO_2$ used was manufactured by Nippon Chemical Industrial Co., Ltd., $Li_2SO_4$ used was manufactured by Aldrich (99.9%), $Li_2MnO_3$ used was manufactured by Nichia Corporation, vapor grown carbon fiber (VGCF) used was manufactured by Showa Denko K.K., In foil used was manufactured by Furuuchi Chemical Corporation, Li foil used was manufactured by Furuuchi Chemical Corporation, and $Li_6PS_5Cl$ or $Li_{6+x}PS_{5-x}Cl_{1+x}$ (x = 0 to 0.5) was used as an argyrodite-type solid electrolyte. As $LiNbO_3$, one produced by subjecting $LiNb(OEt)_5$ manufactured by Kojundo Chemical Lab. Co., Ltd. to heat treatment at 400°C.

In the following examples and comparative examples, Pulverisette P-7 manufactured by Fritsch GmbH was used as a planetary ball mill. As a transmission electron microscope (TEM), JEM-ARM 200F manufactured by JEOL was used. For EDS analysis, EMAXEvolution X-Max manufactured by HORIBA, Ltd. was used. For Raman spectrum measurement, a laser Raman spectrometer LabRAM HR-800 manufactured by HORIBA, Ltd. was used. For the constant current cycle test, a charge-discharge measuring device (BTS-2004) manufactured by Nagano Co Ltd. was used. For the measurement of the ionic conductivity and the electronic conductivity, an impedance analyzer (SI-1260) manufactured by Solartron Group Ltd. was used. As a muffle furnace, one manufactured by Denken Co., Ltd. was used.

Comparative Example 1

(Preparation of $LiCoO_2$-$Li_2SO_4$ positive electrode active material)

An oxide-based positive electrode active material was prepared by the procedure described below.

$LiCoO_2$ and $Li_2SO_4$ were weighed to have a molar ratio of $LiCoO_2$ : $Li_2SO_4$ = 80 : 20. The weighed samples were mixed and subjected to mechanochemical treatment in a planetary ball mill to prepare an $LiCoO_2$-$Li_2SO_4$ positive electrode active material (Comparative Example 1). The treatment was performed in a glove box filled with an argon atmosphere, and works were performed in an environment with a moisture value of -70°C or more and an oxygen concentration of 10 ppm or less (hereinafter, all the works performed in the glove box were performed under these conditions). The mechanochemical conditions were as follows: 40.0 g of $ZrO_2$ balls having a diameter of 5.0 mm and 0.4 g of a sample were put into a 45 ml pot made of $ZrO_2$, and treatment was performed at 370 rpm for 50 hours.

Example 1: Preparation 1 of $LiCoO_2$-$Li_2SO_4$ positive electrode active material as glass-ceramic

The $LiCoO_2$-$Li_2SO_4$ positive electrode active material sample of Comparative Example 1 was placed in a magnetic crucible (outer diameter: 7.0 mm, inner diameter: 5.0 mm), and heat-treated in an argon stream using an electric furnace provided in a glove box. As the heat treatment conditions, the temperature was raised from room temperature to 400°C and held at 400°C for 1 hour. The weighing and the heat treatment were performed in the glove box. Thereby, a glass-ceramic $LiCoO_2$-$Li_2SO_4$ positive electrode active material sample (Example 1) was obtained.

Example 2: Preparation of $LiNbO_3$-coated glass-ceramic $LiCoO_2$-$Li_2SO_4$ positive electrode active material

A powder of the glass-ceramic $LiCoO_2$-$Li_2SO_4$ positive electrode active material sample of Example 1 was placed on a pan, and a $LiNbO_3$ solution was added such that the mass ratio of the glass-ceramic $LiCoO_2$-$Li_2SO_4$ positive electrode active material sample to $LiNbO_3$ in the $LiNbO_3$ solution was (the glass-ceramic $LiCoO_2$-$Li_2SO_4$ positive electrode active material sample) : $LiNbO_3$ = 99 : 1, thereby coating the glass-ceramic $LiCoO_2$-$Li_2SO_4$ positive electrode active material sample. Thereby, a $LiNbO_3$-coated glass-ceramic $LiCoO_2$-$Li_2SO_4$ positive electrode active material sample (Example 2) was obtained.

(Measurement of charge-discharge characteristics)

all-solid-state batteries were constructed using the respective positive electrode active material samples prepared, and their charge-discharge characteristics were measured. The all-solid-state batteries were manufactured as follows.

83.4 mg of each of the positive electrode active material samples was mixed with 15.5 mg of an argyrodite-type solid electrolyte and 1.1 mg of vapor grown carbon fiber (VGCF). The mixture was mixed for about 5 minutes using a mortar and then stirred with a vortex mixer for 3 minutes. 120 mg of an argyrodite-type solid electrolyte was placed in a cylindrical polycarbonate with a hole having a diameter of 10 mm, and lightly pressed with a hydraulic press at a pressure of 36 MPa to form a pellet. Further, 10 mg of the mixed positive electrode active material sample was added, and uniaxially pressed with a hydraulic press at a pressure of 720 MPa for 5 minutes to form a two-layer pellet including the positive electrode and the solid electrolyte. An In foil having a thickness of 300 $\mu$m and a diameter of 8 mm was stacked on the solid electrolyte side of the molded pellet, and a Li foil having a diameter of 7 mm was further stacked on the indium foil to form a negative electrode. The resulting laminate was uniaxially pressed with a hydraulic press at a pressure of 120 MPa for 5 minutes and sandwiched between current collectors made of stainless steel (SUS) to construct an all-solid-state battery. Incidentally, in a battery using an Li-In alloy as a negative electrode, the molar ratio of the negative electrode was greatly excessive as compared with the positive electrode active material, and thus the capacity of the battery was calculated with reference to the positive electrode active material. In addition, Li-In comes to have a diameter of 10 mm by pressing.

In order to examine the charge-discharge characteristics of the all-solid-state battery prepared, constant current charge-discharge measurement was performed. The measurement was performed at 25°C, and the current density was set to 0.26 mA cm$^{-2}$. The cut-off potential was set to 2 to 4 V based on Li-In.

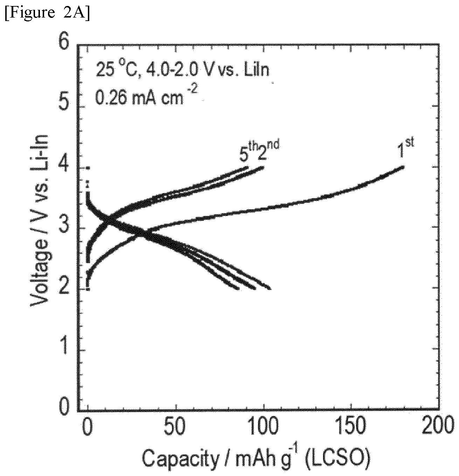

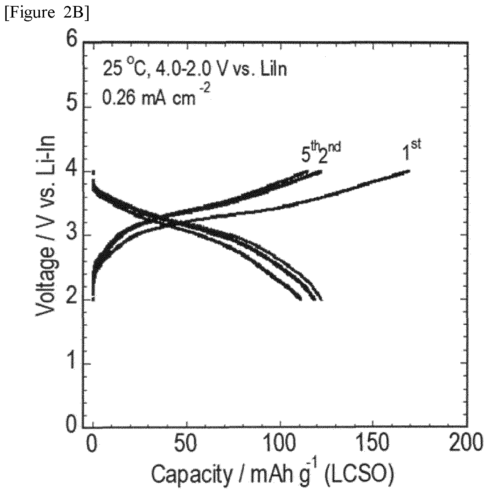

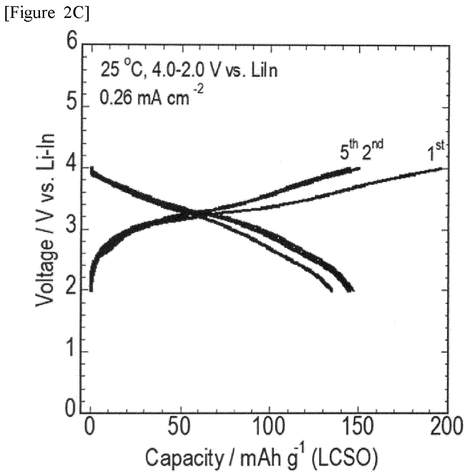

The result derived from the use of the positive electrode active material of Comparative Example 1 is shown in Fig. 2A, the result derived from the use of the positive electrode active material of Example 1 is shown in Fig. 2B, and the result derived from the use of the positive electrode active material of Example 2 is shown in Fig. 2C. Figs. 2A to 2C demonstrate that the all-solid-state batteries using the positive electrode active materials of Examples 1 and 2 have improved charge-discharge characteristics as compared with the all-solid-state battery using the positive electrode active material of Comparative Example 1. This fact shows that the performance of an all-solid-state battery can be improved by producing a positive electrode using a positive electrode active material being a glass-ceramic.

Example 3: Preparation 2 of $LiCoO_2$-$Li_2SO_4$ positive electrode active material as glass-ceramic

A glass-ceramic $LiCoO_2$-$Li_2SO_4$ positive electrode active material sample (Example 3) was obtained in the same manner as in Example 1 except that the heat treatment condition was set to 300°C.

Example 4: Preparation 3 of $LiCoO_2$-$Li_2SO_4$ positive electrode active material as glass-ceramic

A glass-ceramic $LiCoO_2$-$Li_2SO_4$ positive electrode active material sample (Example 4) was obtained in the same manner as in Example 1 except that the heat treatment condition was set to 500°C.

Example 5: Preparation 4 of $LiCoO_2$-$Li_2SO_4$ positive electrode active material as glass-ceramic

A glass-ceramic $LiCoO_2$-$Li_2SO_4$ positive electrode active material sample (Example 5) was obtained in the same manner as in Example 1 except that the heat treatment condition was set to 600°C.

(Measurement of Raman spectrum)

Raman spectra were measured using the sample powders of the positive electrode active materials of Comparative Example 1 and Examples 1 and 3 to 5. For the measurement, a laser Raman spectrometer LabRAM HR-800 was used, and a powder sample was filled and fixed in an Al pan in argon gas, and measurement was performed using an airtight sample stand (LIBCell-P11D5, Nanophoton Corporation). The measurement was performed using a green laser (532 nm) as an oscillation line. $LiMn_2O_4$ and $LiCoO_2$ were also measured in the same manner.

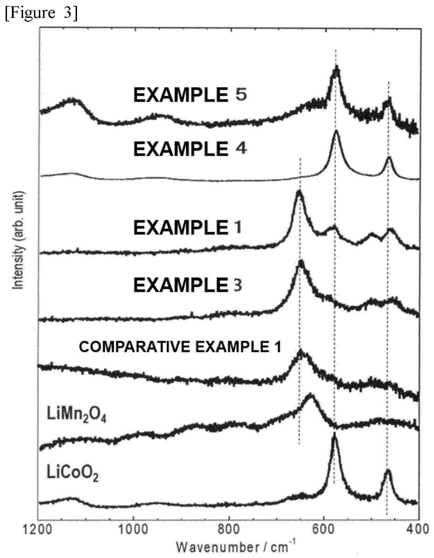

The measured results are shown in Fig. 3. As can be seen from Fig. 3, no Raman band is observed at 430 cm$^{-1}$ and 570 cm$^{-1}$ and a Raman band is observed at 700 cm$^{-1}$ with the positive electrode active material of Comparative Example 1, whereas peaks are observed at 430 cm$^{-1}$ and 570 cm$^{-1}$ with the positive electrode active materials of Examples after heating. This fact has suggested that a layered rock salt structure of $LiCoO_2$ was formed in the positive electrode active materials after heating. In addition, it has also been suggested that the lower the heat treatment temperature, the more the presence of the spinel structure.

(Impedance measurement)

Impedance measurement was performed using the sample powders of the positive electrode active materials of Comparative Example 1 and Examples 1 and 3 to 5. The AC impedance was measured using an impedance analyzer (SI-1260) by preparing a polycarbonate cell as follows.

SKD was used as a current collector, and polycarbonate having an inner diameter of 10 mm was used as an insulating material. 150 mg of each powder sample was weighed out and added into a rod, and molding was performed using a hydraulic press at 360 MPa for 5 minutes using a uniaxial press to prepare a pellet. The pellet was fixed by swaging it with a screw together with a shaft and the rod, placed in a glass container, and sealed with a rubber stopper. The measurement frequency was set to 0.1 Hz to $1 \times 10^6$ Hz, the AC amplitude was set to 10 mV, the intersection of the semicircle of the impedance plot obtained and the real axis was defined as the resistance R of the sample, and the ionic conductivity $\sigma$ was determined from the following equation.

$$\sigma = (1/R) \cdot (L/S) \quad (1)$$

L: Thickness of pellet (cm) S: Electrode surface area ($0.785 \ cm^2$)

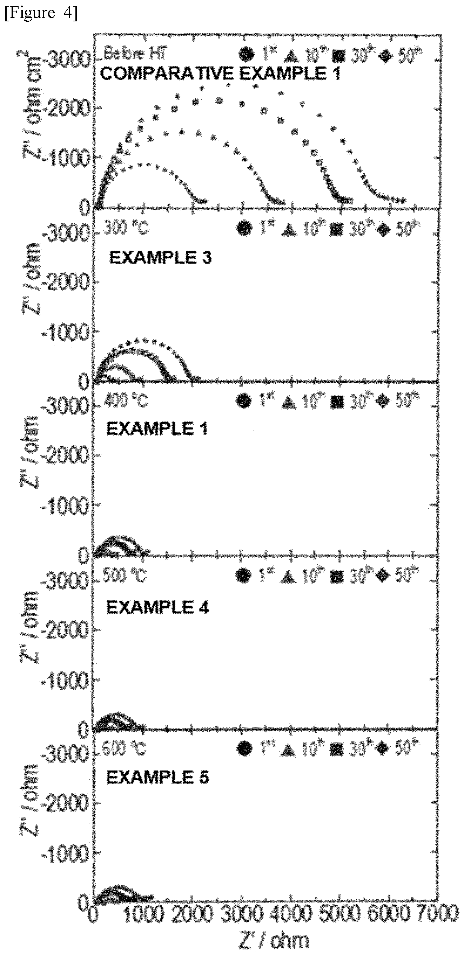

Nyquist plots of Comparative Example 1 and Examples 1 and 3 to 5 are shown in Fig. 4. Fig. 4 demonstrates that the resistance of the positive electrode active material is greatly reduced by using a glass-ceramic positive electrode active material instead of a glass positive electrode active material like that in the comparative example.

(Charge-discharge cycle test)

all-solid-state batteries using the positive electrode active material samples of Comparative Example 1 and Examples 1 and 3 to 5 were constructed, and charge-discharge was repeated to examine charge-discharge cycle characteristics. The configurations of the all-solid-state batteries are as described above except for the difference in the positive electrode active material.

A constant current charge-discharge measurement was performed using the prepared all-solid-state batteries. The measurement was performed at 25°C, and the current density was set to 0.32 mA $cm^{-2}$. The cut-off potential was set to 2 to 4 V based on Li-In.

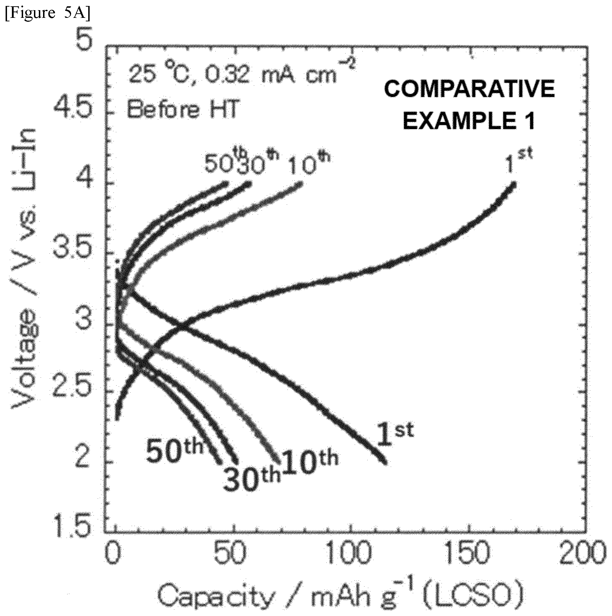

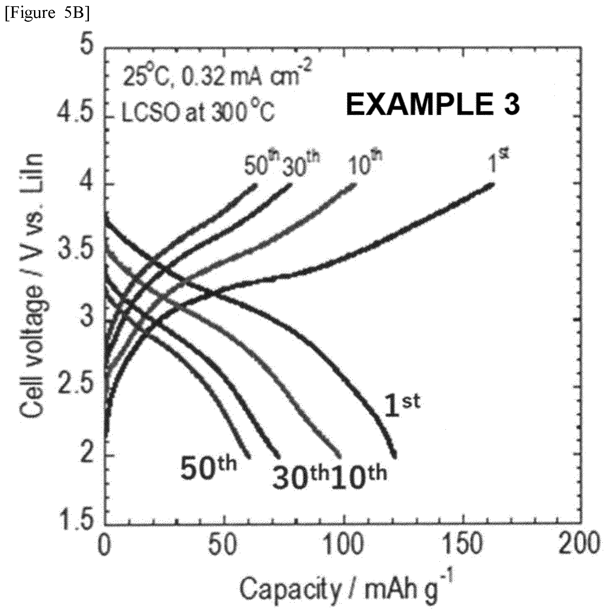

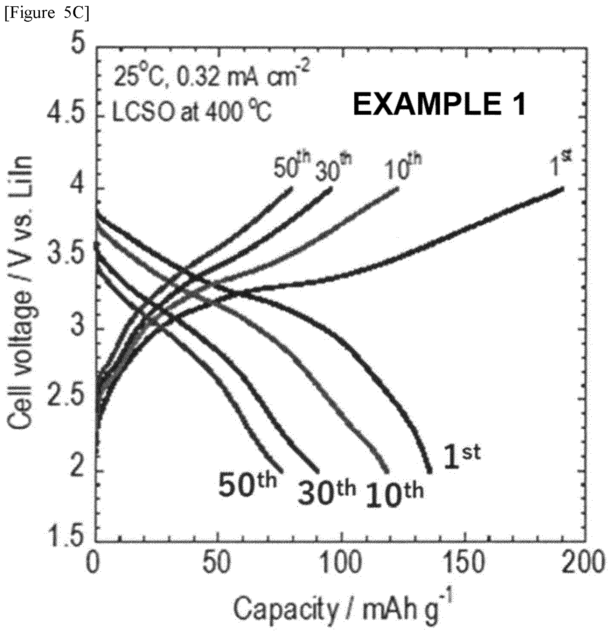

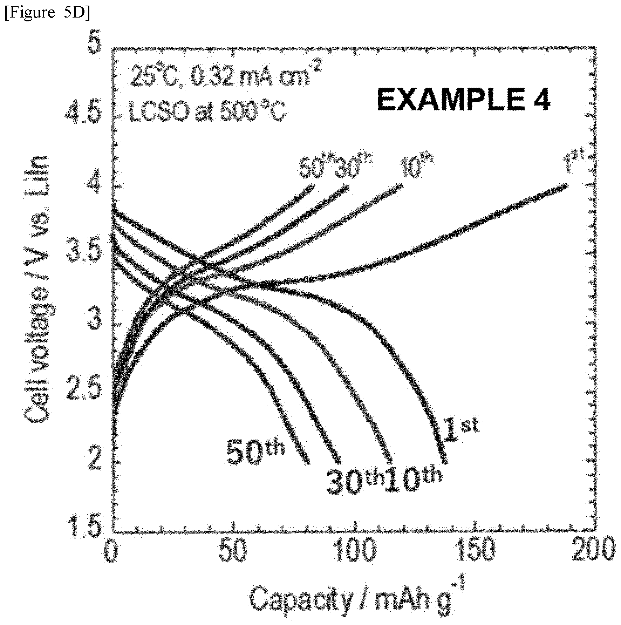

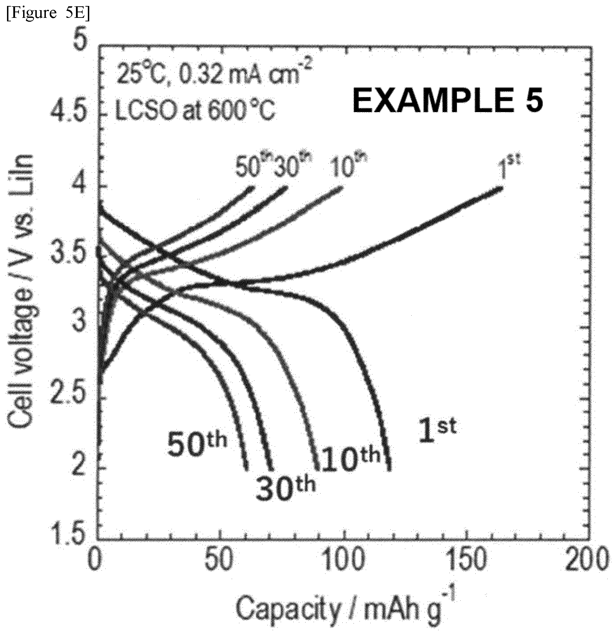

The result derived from the use of the positive electrode active material of Comparative Example 1 is shown in Fig. 5A, the result derived from the use of the positive electrode active material of Example 3 is shown in Fig. 5B, the result derived from the use of the positive electrode active material of Example 1 is shown in Fig. 5C, the result derived from the use of the positive electrode active material of Example 4 is shown in Fig. 5D, and the result derived from the use of the positive electrode active material of Example 5 is shown in Fig. 5E. These results are collectively shown in Table 1.

[Table 1]

|  | Comparative Example 1 | Example 3 | Example 1 | Example 4 | Example 5 |
|---|---|---|---|---|---|
| Heating | No | 300°C | 400°C | 500°C | 600°C |
| 1st discharge capacity / mAh $g^{-1}$ | 114 | 120 | 136 | 137 | 118 |
| 50th discharge capacity / mAh $g^{-1}$ | 44 | 59 | 76 | 80 | 60 |
| Capacity retention | 39 | 49 | 56 | 58 | 51 |

Figs. 5A to 5E and Table 1 demonstrate that the all-solid-state batteries using the positive electrode active materials of Examples 1 and 3 to 5 have improved charge-discharge characteristics as compared with the all-solid-state battery using the non-heated positive electrode active material of Comparative Example 1. This fact shows that owing to producing a positive electrode using a glass-ceramic positive electrode active material, an all-solid-state battery being superior in charge-discharge performance even when subjected to charge and discharge repeatedly can be obtained.

(Thermogravimetric measurement)

The weight change that occurred when the $LiCoO_2$-$Li_2SO_4$ positive electrode active material sample of Comparative Example 1 was heated was measured by thermogravimetry (TG measurement). As to heating conditions, the temperature was raised from room temperature to 500°C at 2°C/min. As a result, the weight change before and after the heat treatment was 2% or less. This demonstrates that the thermal decomposition was hardly caused by heating. It was also suggested that the composition hardly changed due to heating.

[Elemental analysis (CHNS)]

CHNS analysis was performed on the $LiCoO_2$-$Li_2SO_4$ positive electrode active material sample of Comparative Example 1 and the glass-ceramic $LiCoO_2$-$Li_2SO_4$ positive electrode active material samples of Examples 1 and 3 to 5 to examine the change in the composition of S due to heat treatment. A CHNS elemental analysis VarioEL cube was used as an elemental analyzer, and Sn was used as a combustion aid for inorganic analysis. As a result, in the $LiCoO_2$-$Li_2SO_4$ positive electrode active material sample of Comparative Example 1 and the glass-ceramic $LiCoO_2$-$Li_2SO_4$ positive electrode active material samples of Examples 1 and 3 to 5, there was no change in the composition of S.

In combination with the thermogravimetric measurement described above, it is demonstrated that no change in composition such as volatilization of S or addition of oxygen occurred under the heating conditions for preparing the glass-ceramic positive electrode active material sample of the present invention.

(TEM observation)

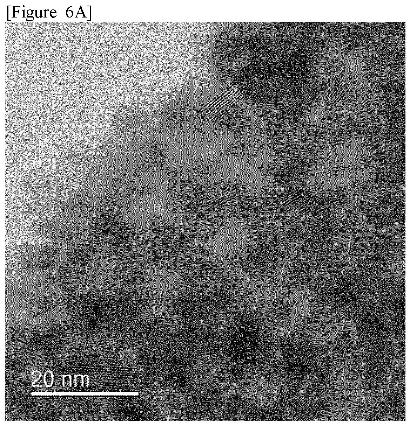

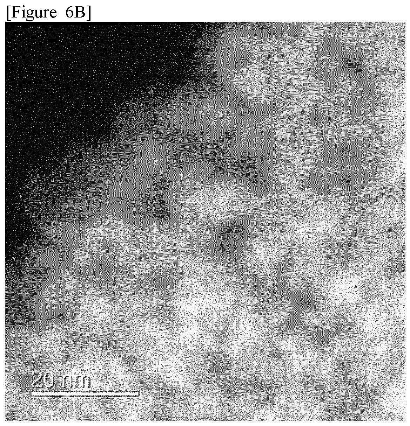

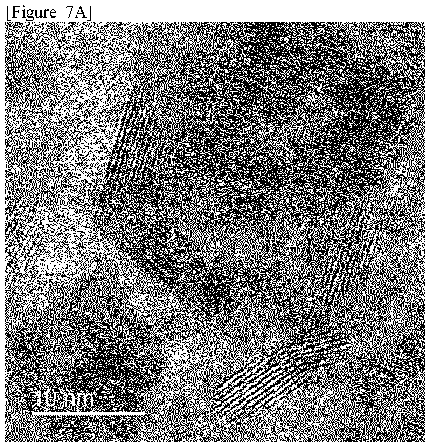

For the particles of the positive electrode active material of Example 1, STEM images were taken using a transmission electron microscope (TEM) and observed. The acceleration voltage was set to 200 kV. BF-STEM images with different magnifications were shown in Figs. 6A, 7A, and 8A, and HAADF-STEM images were shown in Figs. 6B, 7B, and 8B. Figs. 6A and 6B demonstrate that innumerable nanocrystals were confirmed in the particles. As to the nanocrystals, the inventors consider that several tens of thousands to several billions nano-sized crystals are contained in one particle of Example 1. This is because according to calculation on the assumption that nanocrystals with a diameter as large as 1/100 of the particle diameter are contained at 10% by volume, there are 100,000 crystallites. Figs. 7A to 8B demonstrate that nanocrystals having a very characteristic twin structure are included in the nanocrystals in the particles. These observations demonstrate that nanocrystals having a layered structure, nanocrystals having a twin structure, and nanocrystals having a cubic crystal (rock salt or spinel structure) coexist in the particles of the positive electrode active material of Example 1. In this twin structure, many symmetry planes exist in one crystal grain. It is considered that the twin structure is formed in the process of crystallization from an amorphous structure or in the process of phase transition from a metastable crystal phase to a crystal phase. The fact that a large number of such twin structures are confirmed is one of the characteristics of one form of the glass-ceramic of the present invention.

Comparative Example 2

(Preparation 1 of $LiCoO_2$-$Li_2MnO_3$-$Li_2SO_4$ positive electrode active material)

An $LiCoO_2$-$Li_2MnO_3$-$Li_2SO_4$ positive electrode active material was prepared by the following procedure.

$LiCoO_2$, $Li_2MnO_3$, and $Li_2SO_4$ were weighed to have a molar ratio of $LiCoO_2$ : $Li_2MnO_3$ : $Li_2SO_4$ = 60 : 20 : 20. The weighed samples were mixed and subjected to mechanochemical treatment in a planetary ball mill to prepare an $LiCoO_2$-$Li_2MnO_3$-$Li_2SO_4$ positive electrode active material (Comparative Example 2). The mechanochemical conditions were as follows: 20.0 g of $ZrO_2$ balls having a diameter of 5.0 mm and 0.5 g of a sample were put into a 45 ml pot made of $ZrO_2$, and treatment was performed at 370 rpm for 50 hours.

Comparative Example 3

(Preparation 2 of $LiCoO_2$-$Li_2MnO_3$-$Li_2SO_4$ positive electrode active material)

An $LiCoO_2$-$Li_2MnO_3$-$Li_2SO_4$ positive electrode active material (Comparative Example 3) was prepared by treating $LiCoO_2$, $Li_2MnO_3$, and $Li_2SO_4$ in the same manner as in Comparative Example 2 except that the mixing ratio of $LiCoO_2$, $Li_2MnO_3$, and $Li_2SO_4$ was set to $LiCoO_2$ : $Li_2MnO_3$ : $Li_2SO_4$ = 40 : 40 : 20 in molar ratio.

Comparative Example 4

(Preparation 3 of $LiCoO_2$-$Li_2MnO_3$-$Li_2SO_4$ positive electrode active material)

An $LiCoO_2$-$Li_2MnO_3$-$Li_2SO_4$ positive electrode active material (Comparative Example 4) was prepared by treating $LiCoO_2$, $Li_2MnO_3$, and $Li_2SO_4$ in the same manner as in Comparative Example 2 except that the mixing ratio of

$LiCoO_2$, $Li_2MnO_3$, and $Li_2SO_4$ was set to $LiCoO_2$ : $Li_2MnO_3$ : $Li_2SO_4$ = 60 : 20 : 20 in molar ratio.

Comparative Example 5

(Preparation 4 of $LiCoO_2$-$Li_2MnO_3$-$Li_2SO_4$ positive electrode active material)

An $LiCoO_2$-$Li_2MnO_3$-$Li_2SO_4$ positive electrode active material (Comparative Example 5) was prepared by treating $LiCoO_2$, $Li_2MnO_3$, and $Li_2SO_4$ in the same manner as in Comparative Example 2 except that the mixing ratio of $LiCoO_2$, $Li_2MnO_3$, and $Li_2SO_4$ was set to $LiCoO_2$ : $Li_2MnO_3$ : $Li_2SO_4$ = 67.5 : 22.5 : 10 in molar ratio.

Example 6: Preparation 1 of $LiCoO_2$-$Li_2MnO_3$-$Li_2SO_4$ positive electrode active material being glass-ceramic

An $LiCoO_2$-$Li_2MnO_3$-$Li_2SO_4$ positive electrode active material sample of Comparative Example 4 was heated at 400°C for 1 hour. The heating method was performed in the same manner as the treatment method in Example 1. Thereby, a glass-ceramic $LiCoO_2$-$Li_2MnO_3$-$Li_2SO_4$ positive electrode active material (Example 6) was obtained.

Example 7: Preparation 2 of $LiCoO_2$-$Li_2MnO_3$-$Li_2SO_4$ positive electrode active material being glass-ceramic

A glass-ceramic $LiCoO_2$-$Li_2SO_4$ positive electrode active material sample (Example 7) was obtained in the same manner as in Example 6 except that the heat treatment time was set to 1 minute.

Example 8: Preparation 3 of $LiCoO_2$-$Li_2MnO_3$-$Li_2SO_4$ positive electrode active material being glass-ceramic

A glass-ceramic $LiCoO_2$-$Li_2SO_4$ positive electrode active material sample (Example 8) was obtained in the same manner as in Example 6 except that the heat treatment time was set to 30 minutes.

Example 9: Preparation of $LiNbO_3$-coated glass-ceramic $LiCoO_2$-$Li_2MnO_3$-$Li_2SO_4$ positive electrode active material

A powder of the glass-ceramic $LiCoO_2$-$Li_2MnO_3$-$Li_2SO_4$ positive electrode active material sample of Example 8 was coated with $LiNbO_3$. The coating method was performed in the same manner as in Example 2. Thereby, a $LiNbO_3$-coated glass-ceramic $LiCoO_2$-$Li_2MnO_3$-$Li_2SO_4$ positive electrode active material (Example 9) was obtained.

Example 10: Preparation 4 of $LiCoO_2$-$Li_2MnO_3$-$Li_2SO_4$ positive electrode active material being glass-ceramic

A glass-ceramic $LiCoO_2$-$Li_2MnO_3$-$Li_2SO_4$ positive electrode active material sample (Example 10) was obtained in the same manner as in Example 6 except that the heat treatment condition was set to 200°C.

Example 11: Preparation 5 of $LiCoO_2$-$Li_2MnO_3$-$Li_2SO_4$ positive electrode active material being glass-ceramic

A glass-ceramic $LiCoO_2$-$Li_2MnO_3$-$Li_2SO_4$ positive electrode active material sample (Example 11) was obtained in the same manner as in Example 6 except that the heat treatment condition was set to 300°C.

Example 12: Preparation 6 of $LiCoO_2$-$Li_2MnO_3$-$Li_2SO_4$ positive electrode active material being glass-ceramic

A glass-ceramic $LiCoO_2$-$Li_2MnO_3$-$Li_2SO_4$ positive electrode active material sample (Example 12) was obtained in the same manner as in Example 6 except that the heat treatment condition was set to 500°C.

Example 13: Preparation 7 of $LiCoO_2$-$Li_2MnO_3$-$Li_2SO_4$ positive electrode active material being glass-ceramic

A glass-ceramic $LiCoO_2$-$Li_2MnO_3$-$Li_2SO_4$ positive electrode active material sample (Example 13) was obtained in the same manner as in Example 6 except that the heat treatment condition was set to 600°C.

Example 14: Preparation 8 of $LiCoO_2$-$Li_2MnO_3$-$Li_2SO_4$ positive electrode active material being glass-ceramic

A glass-ceramic $LiCoO_2$-$Li_2MnO_3$-$Li_2SO_4$ positive electrode active material sample (Example 14) was obtained in the same manner as in Example 6 except that the $LiCoO_2$-$Li_2MnO_3$-$Li_2SO_4$ positive electrode active material sample of Comparative Example 3 was used instead of the $LiCoO_2$-$Li_2MnO_3$-$Li_2SO_4$ positive electrode active material sample of Comparative Example 4.

Example 15: Preparation 9 of LiCoO$_2$-Li$_2$MnO$_3$-Li$_2$SO$_4$ positive electrode active material being glass-ceramic

A glass-ceramic LiCoO$_2$-Li$_2$MnO$_3$-Li$_2$SO$_4$ positive electrode active material sample (Example 15) was obtained in the same manner as in Example 6 except that the LiCoO$_2$-Li$_2$MnO$_3$-Li$_2$SO$_4$ positive electrode active material sample of Comparative Example 3 was used instead of the LiCoO$_2$-Li$_2$MnO$_3$-Li$_2$SO$_4$ positive electrode active material sample of Comparative Example 4, and the heat treatment time was set to 30 minutes.

Example 16: Preparation 10 of LiCoO$_2$-Li$_2$MnO$_3$-Li$_2$SO$_4$ positive electrode active material being glass-ceramic

A glass-ceramic LiCoO$_2$-Li$_2$MnO$_3$-Li$_2$SO$_4$ positive electrode active material sample (Example 16) was obtained in the same manner as in Example 6 except that the LiCoO$_2$-Li$_2$MnO$_3$-Li$_2$SO$_4$ positive electrode active material sample of Comparative Example 5 was used instead of the LiCoO$_2$-Li$_2$MnO$_3$-Li$_2$SO$_4$ positive electrode active material sample of Comparative Example 4.

(Measurement of charge-discharge characteristics)

All-solid-state batteries were constructed using the respective positive electrode active material samples prepared, and their charge-discharge characteristics were measured. The all-solid-state batteries were manufactured as follows.

Positive electrode composites were prepared by mixing 8.34 mg of each of the positive electrode active material samples with 1.55 mg of an argyrodite-type solid electrolyte and 0.11 mg of VGCF. The mixture was mixed for about 5 minutes using a mortar and then stirred with a vortex mixer for 3 minutes. 120 mg of an argyrodite-type solid electrolyte was lightly pressed with a hydraulic press at a pressure of 36 MPa to form a pellet. 10 mg of the mixed positive electrode active material sample was added into a cylindrical cemented carbide die having a hole having a diameter of 10 mm. 120 mg of an argyrodite-type solid electrolyte pellet was added thereto, and the resulting mixture was uniaxially pressed with a hydraulic press at a pressure of 720 MPa for 5 minutes to form a pellet. An In foil having a thickness of 300 $\mu$m and a diameter of 8 mm was stacked on the solid electrolyte side of the molded pellet, and a Li foil having a diameter of 7 mm was further stacked on the indium foil to form a negative electrode. The resulting laminate was uniaxially pressed with a hydraulic press at a pressure of 120 MPa for 5 minutes and sandwiched between current collectors made of stainless steel (SUS) to construct an all-solid-state battery. In the course of pressing, Li and In react to form Li-In alloy. Incidentally, in a battery using an Li-In alloy as a negative electrode, the molar ratio of the negative electrode was greatly excessive as compared with the positive electrode active material, and thus the capacity of the battery was calculated with reference to the positive electrode active material.

The prepared all-solid-state batteries were subjected to a constant current charge-discharge measurement. The measurement was performed at 25°C, and the current density was set to 0.13 mA cm$^{-2}$. The cut-off potential was set to 1.4 to 4 V based on Li-In.

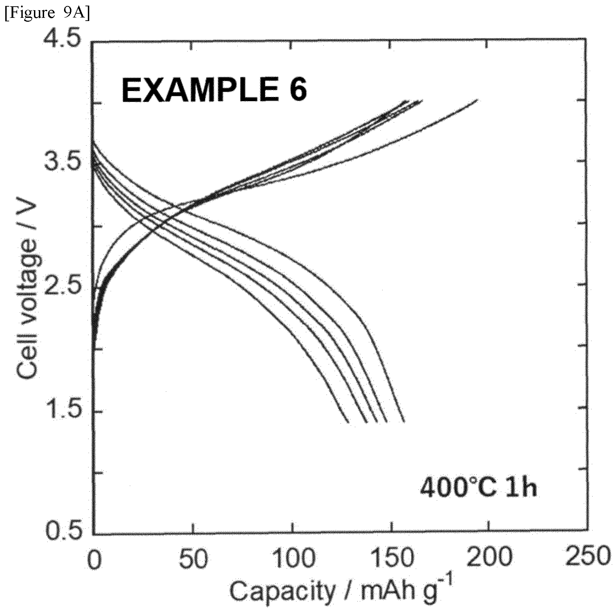

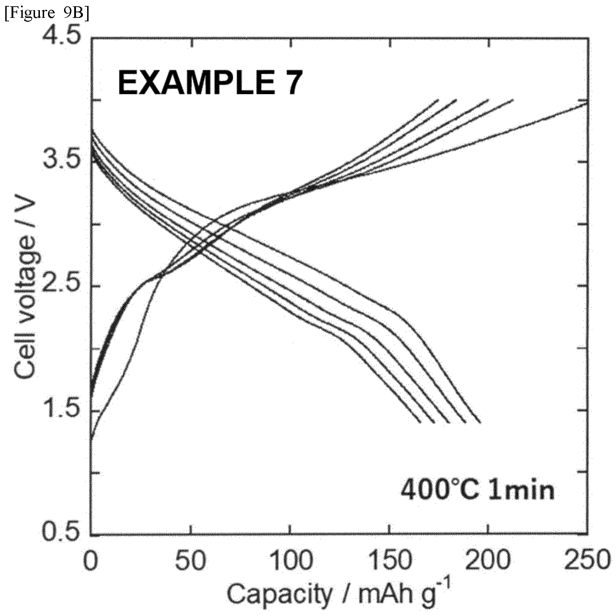

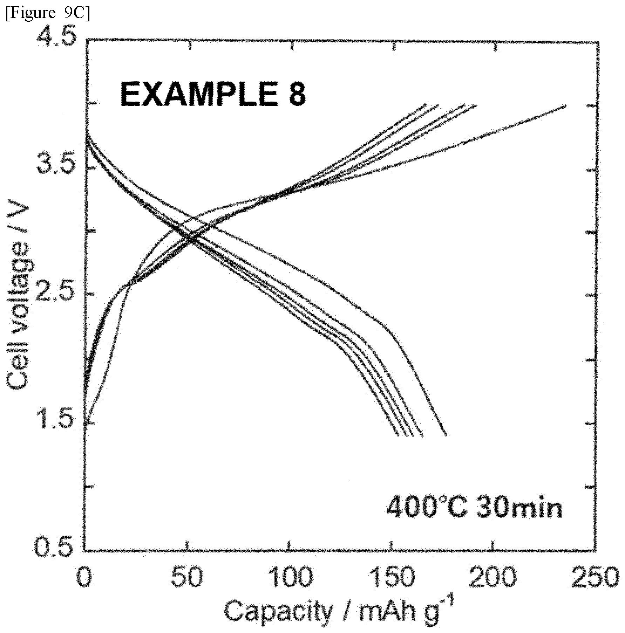

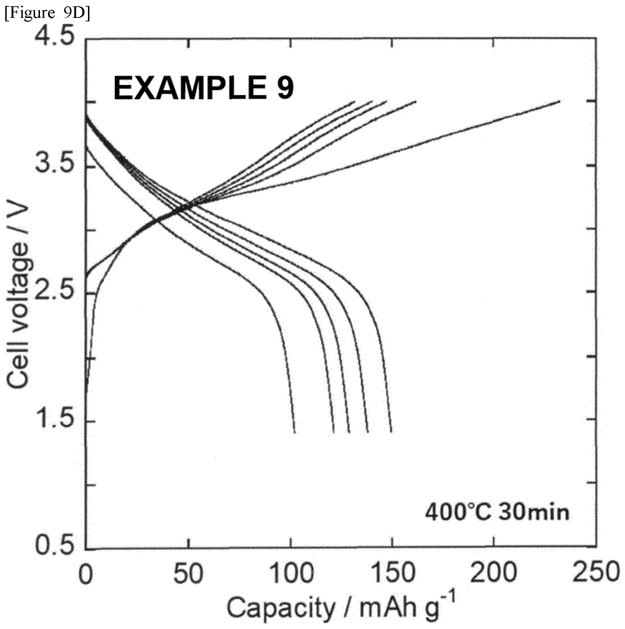

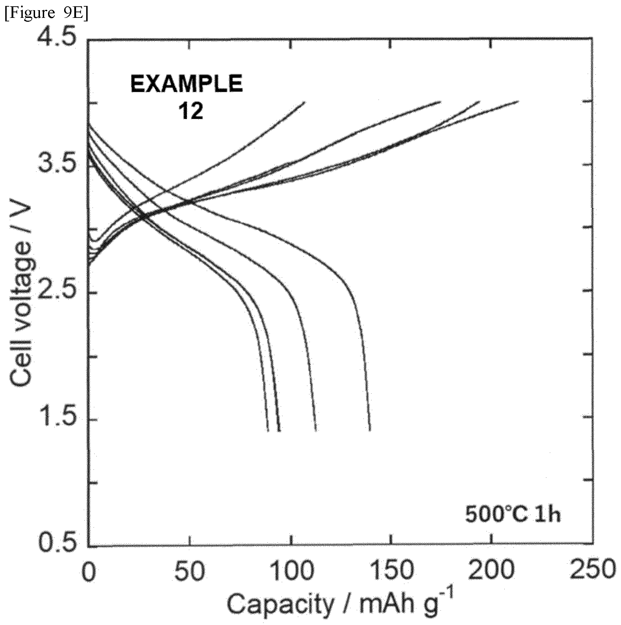

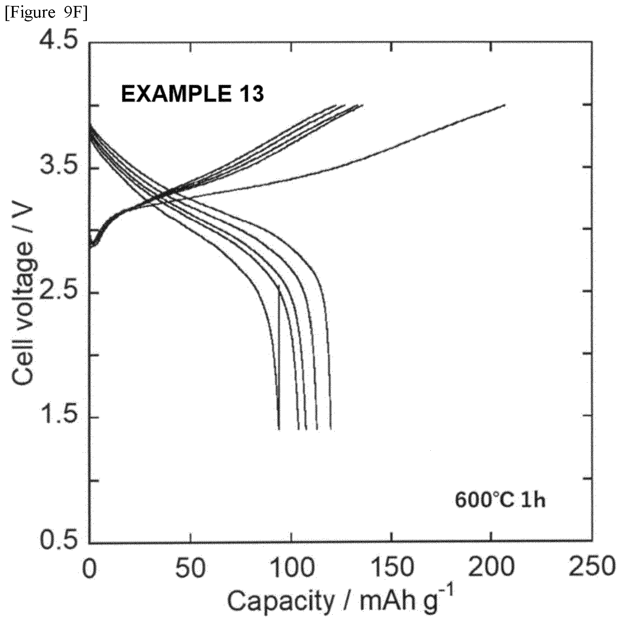

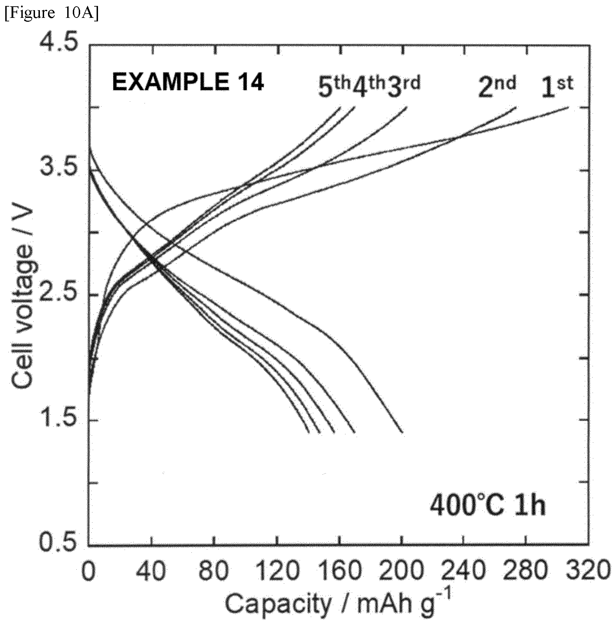

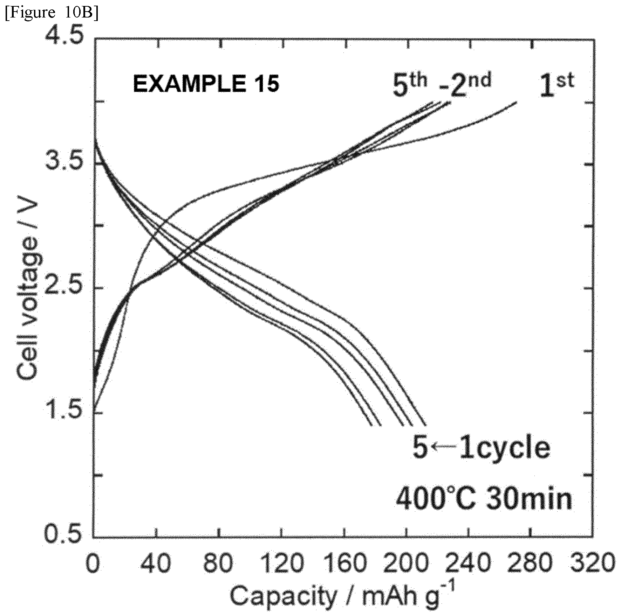

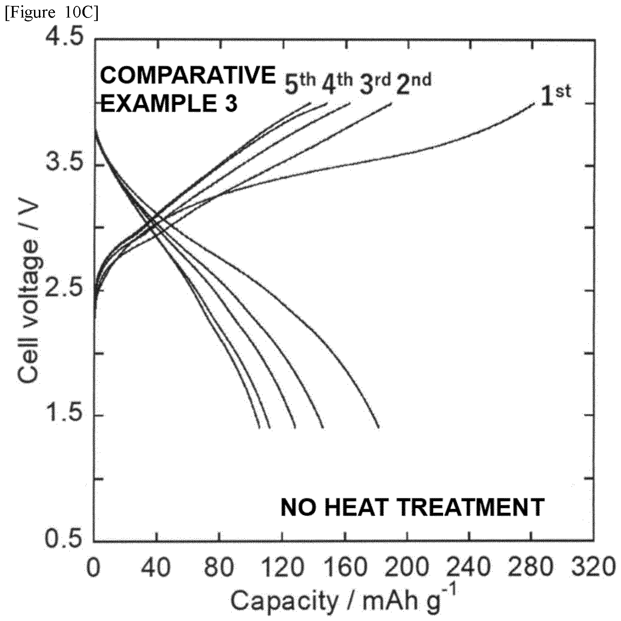

The result derived from the use of the positive electrode active material of Example 6 is shown in Fig. 9A, the result derived from the use of the positive electrode active material of Example 7 is shown in Fig. 9B, the result derived from the use of the positive electrode active material of Example 8 is shown in Fig. 9C, the result derived from the use of the positive electrode active material of Example 9 is shown in Fig. 9D, the result derived from the use of the positive electrode active material of Example 12 is shown in Fig. 9E, the result derived from the use of the positive electrode active material of Example 13 is shown in Fig. 9F, the result derived from the use of the positive electrode active material of Example 14 is shown in Fig. 10A, the result derived from the use of the positive electrode active material of Example 15 is shown in Fig. 10B, and the result derived from the use of the positive electrode active material of Comparative Example 3 is shown in Fig. 10C. These measurement results are collectively shown in Tables 2 to 4.

[Table 2]

| | Example 6 | | Example 7 | | Example 8 | | Example 9 | |
|---|---|---|---|---|---|---|---|---|
| Heating | 400°C 1 h | | 400°C 1 min | | 400°C 30 min | | 400°C 30 min | |
| | Charge | Discharge | Charge | Discharge | Charge | Discharge | Charge | Discharge |
| 1st (mAh g$^{-1}$) | 195 | 157 | 253 | 196 | 234 | 177 | 232 | 150 |
| 2nd (mAh g$^{-1}$) | 158 | 148 | 212 | 188 | 190 | 165 | 162 | 138 |
| 5th (mAh g$^{-1}$) | 160 | 128 | 174 | 166 | 165 | 153 | 131 | 102 |

[Table 3]

|  | Example 12 | | Example 13 | |
|---|---|---|---|---|
| Heating | 500°C 1 h | | 600°C 1 h | |
|  | Charge | Discharge | Charge | Discharge |
| 1st (mAh g⁻¹) | 213 | 140 | 207 | 120 |
| 2nd (mAh g⁻¹) | 175 | 112 | 135 | 112 |
| 15th (mAh g⁻¹) | 107 | 89 | 122 | 94 |

[Table 4]

|  | Example 14 | | Example 15 | | Comparative Example 3 | |
|---|---|---|---|---|---|---|
| Heating | 400°C 1 h | | 400°C 30 min | | No | |
|  | Charge | Discharge | Charge | Discharge | Charge | Discharge |
| 1st (mAh g⁻¹) | 307 | 200 | 270 | 212 | 281 | 182 |
| 2nd (mAh g⁻¹) | 273 | 170 | 225 | 203 | 189 | 146 |
| 5th (mAh g⁻¹) | 160 | 140 | 216 | 177 | 137 | 105 |

From Figs. 9A to 9F and Tables 2 and 3, it is found that the all-solid-state batteries using the positive electrode active materials of Examples 6 to 9, 12, and 13 exhibit superior charge-discharge characteristics. Figs. 10A to 10C and Table 4 demonstrate that the all-solid-state batteries using the positive electrode active materials of Examples 14 and 15 have improved charge-discharge characteristics as compared with the all-solid-state battery using the positive electrode active material of Comparative Example 3. This fact shows that the performance of an all-solid-state battery can be improved by producing a positive electrode using a positive electrode active material being a glass-ceramic.

An all-solid-state battery in which the amount of VGCF mixed with the positive electrode active material of Example 6 was increased was produced, and the performance was evaluated. The all-solid-state battery was prepared by mixing the positive electrode active material sample, an argyrodite-type solid electrolyte, and VGCF to have a ratio of positive electrode active material : argyrodite-type solid electrolyte : VGCF = 83.1 : 15.3 : 1.6.

The prepared all-solid-state batteries were subjected to a constant current charge-discharge measurement. The measurement was performed at 25°C. The current density was set to 0.13 mA cm⁻² from the first cycle to the fifth cycle and set to 0.26 mA cm⁻² from the sixth cycle. The cut-off potential was set to 1.4 to 4 V based on Li-In.

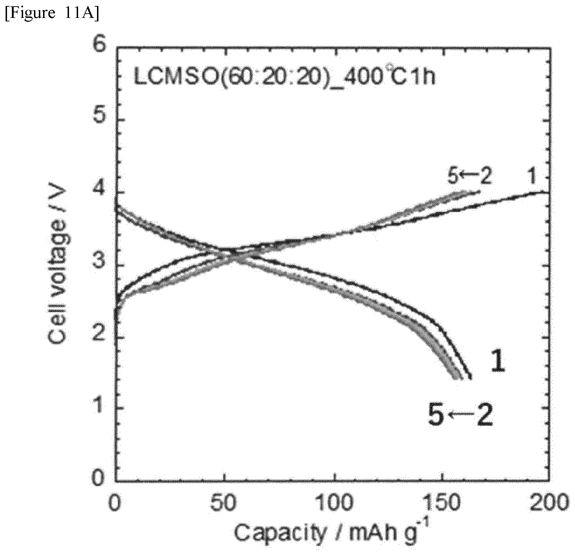

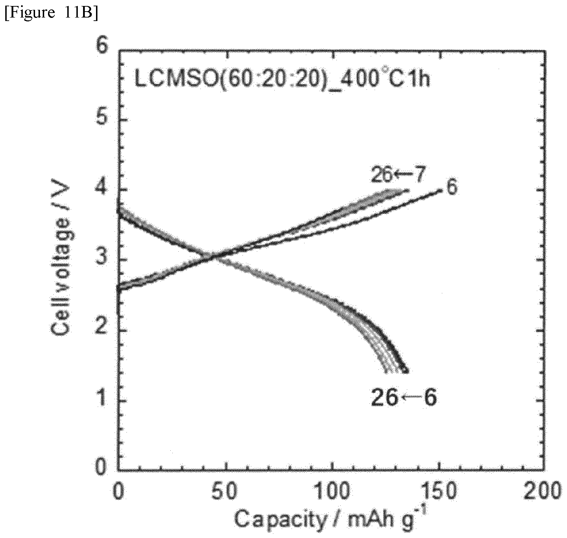

The results of from the first cycle to the fifth cycle are shown in Fig. 11A, and the results of the sixth and subsequent cycles are shown in Fig. 11B. Figs. 11A and 11B demonstrate that the charge-discharge cycle performance is further improved by improving the electron conductivity of a positive electrode.

(Operation characteristics in cell using electrolytic solution)

Coin cells were prepared using the positive electrode active material samples of Examples 6, 10, 11, and 16, and the charge-discharge characteristics were examined. As a coin cell, one having the following configuration was used.

0.45 g of the positive electrode active material, 0.025 g of acetylene black, and 0.025 g of a solution of 10 wt% PVDF in N-methylpyrrolidone were weighed out such that the positive electrode active material, acetylene black, and polyvinylidene fluoride (PVdF) had a mass ratio of positive electrode active material : acetylene black : PVdF = 90 : 5 : 5, mixed with a rotation-revolution mixer or an ultrasonic homogenizer to be slurried, and applied to an aluminum foil to have a coating amount of 5 to 10 mg cm⁻². After the application, it was dried at 80°C overnight (for about 15 hours), and then dried on a hot plate at a top plate temperature of 120°C for 1 hour, affording a positive electrode sheet. A positive electrode sheet punched out to have a diameter of 10 mm was pressed at 360 MPa, affording a positive electrode. As an electrolytic solution, 1 M LiPF$_6$ in EC + DMC was used. EC is ethylene carbonate, and DMC is dimethyl carbonate. A coin cell was produced using a Li metal foil having a thickness of 200 $\mu$m as a negative electrode, and evaluated.

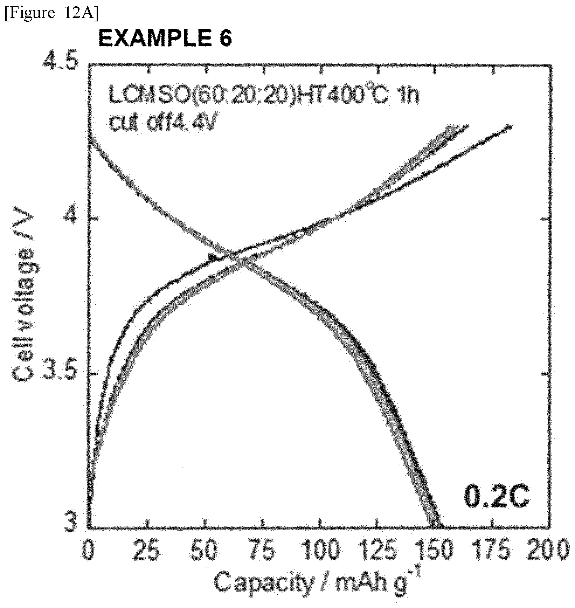

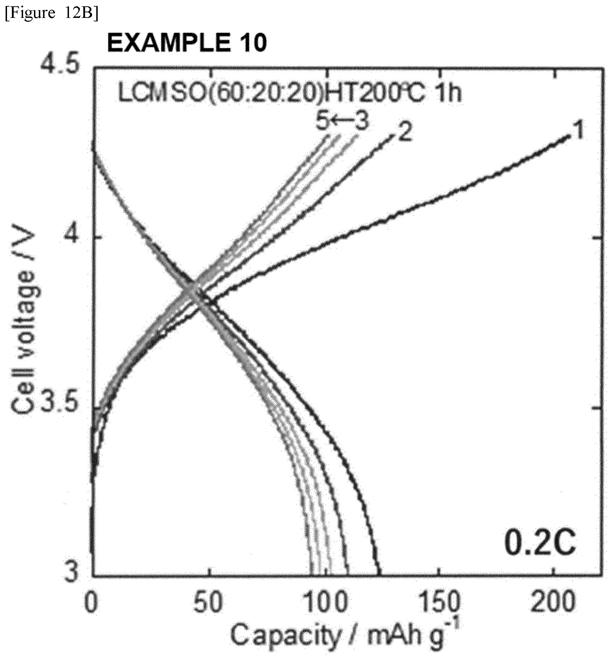

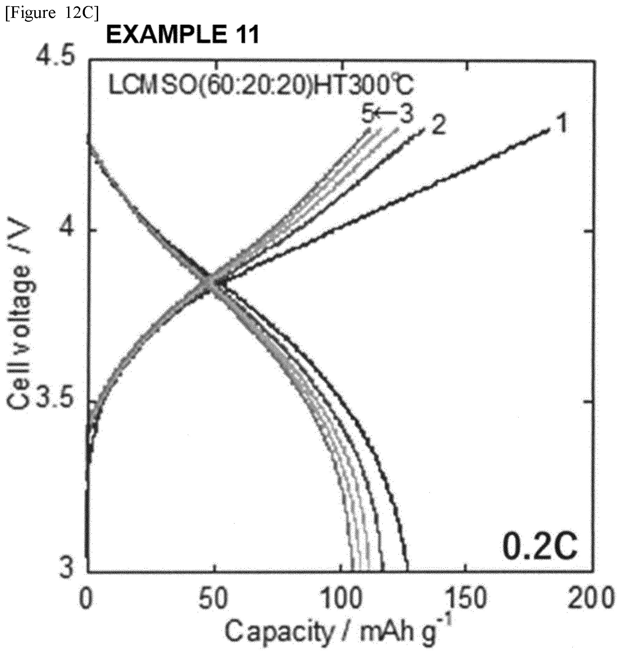

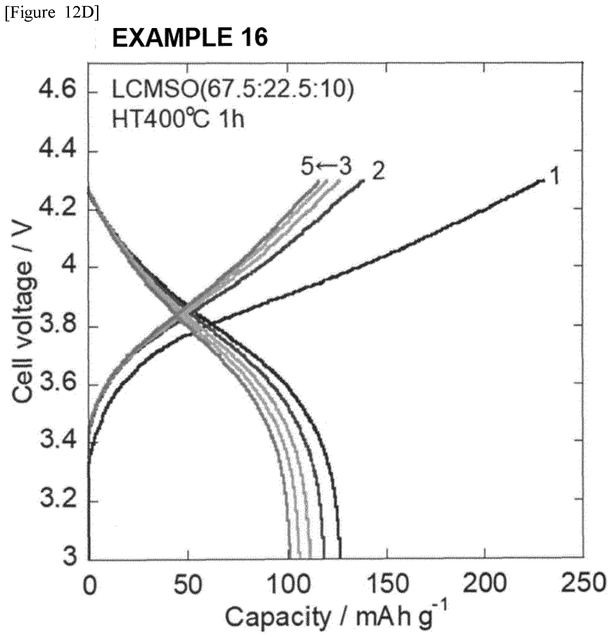

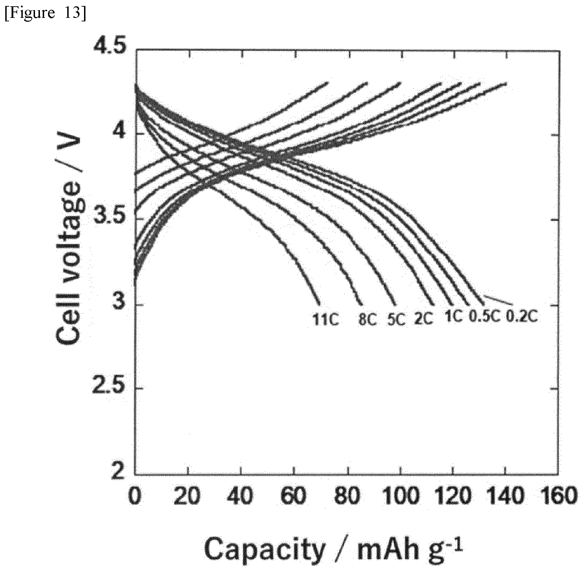

The measurement was performed at 25°C. The current and the cut-off voltage during charge were set to 0.2 mA/4.3 V, and the current and the cut-off voltage during discharge were set to 0.2 mA/3.0 V 1C was calculated at 1C = 0.82 mA(150 mA g⁻¹). For the coin cell using the positive electrode active material sample of Example 6, measurement was also performed at different discharge rates. At this time, the current and the cut-off voltage during charge were set to 0.2 mA/4.3 V, and the current and the cut-off voltage during discharge were set to 0.2 mA, 0.5 mA, 1.0 mA, 2.0 mA, 5.0 mA, and 10.0 mA/3.0 V The voltage in this case is a potential difference from Li of the negative electrode. 1C was calculated at 1C = 0.94 mA(150 mA $g^{-1}$). The results are shown in Figs. 12A to 12D and Fig. 13. The measurement results of the coin cell using the positive electrode active material sample of Example 6 are shown in Fig. 12A, the measurement results of the coin cell using the positive electrode active material sample of Example 10 are shown in Fig. 12B, the measurement results of the coin cell using the positive electrode active material sample of Example 11 are shown in Fig. 12C, the measurement results of the coin cell using the positive electrode active material sample of Example 16 are shown in Fig. 12D, and the measurement results of changing the rate of the coin cell using the positive electrode active material sample of Example 6 are shown in Fig. 13. From Figs. 12A to 12D, it is found that the glass-ceramic positive electrode active materials of the present invention exhibit superior operation performance even in a cell using an electrolytic solution. In addition, from Fig. 13, it is found that the glass-ceramic positive electrode active material of the present invention also has output characteristics as high as discharging can be performed even at a high rate such as 11C.

(TEM observation)

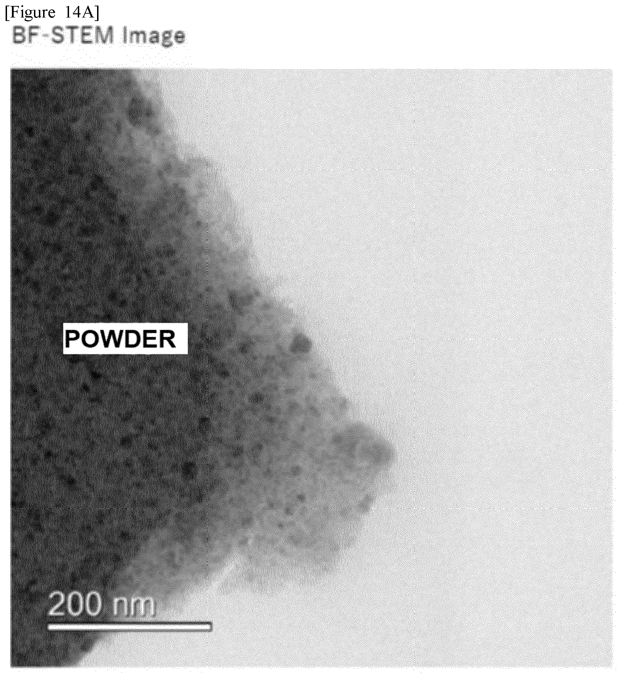

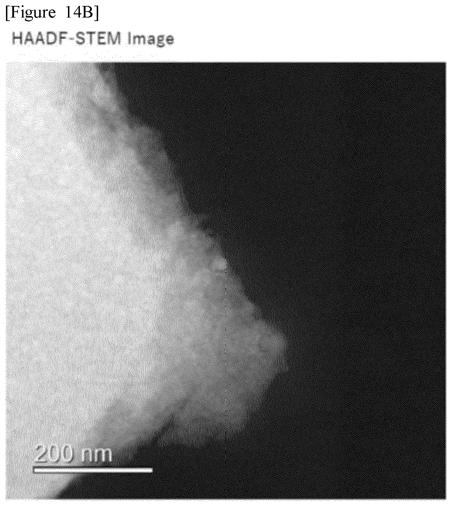

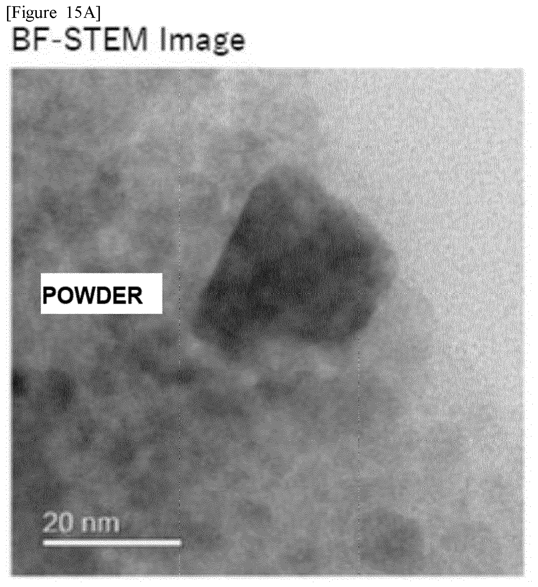

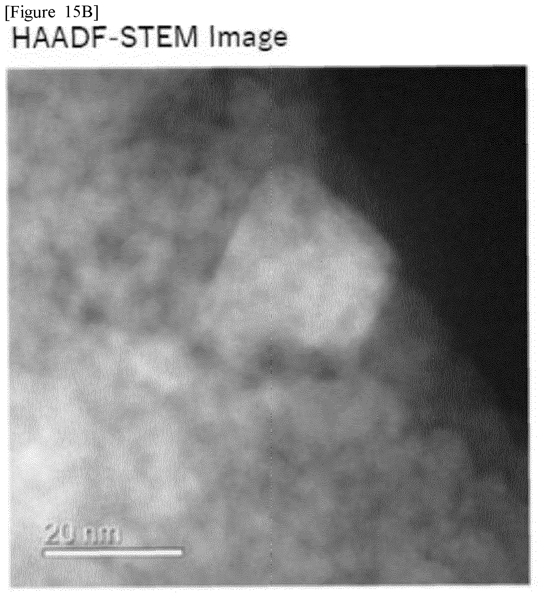

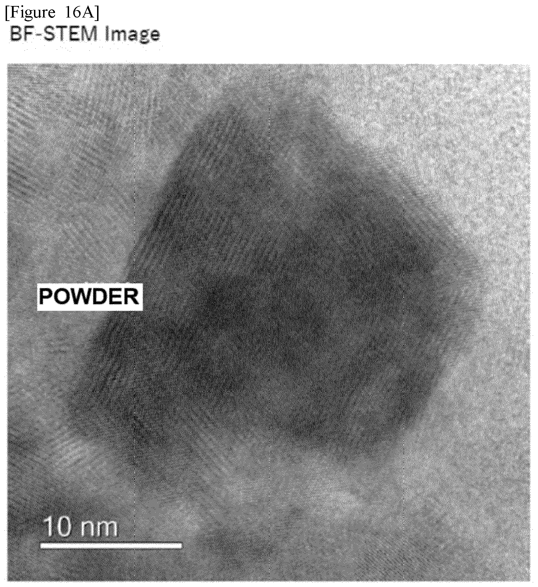

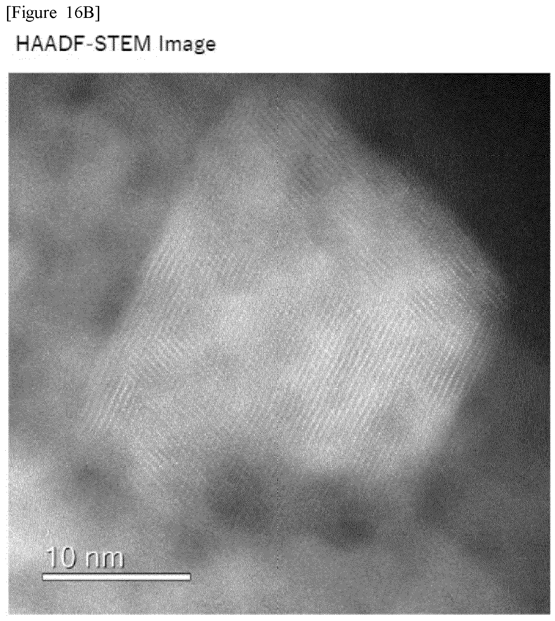

For the particles of the positive electrode active material of Example 6, STEM images were taken using a TEM and observed. The acceleration voltage was set to 200 kV. Figs. 14A, 15A, and 16A show BF-STEM images of particles of the positive electrode active material of Example 6, and Figs. 14B, 14B, and 14B show HAADF-STEM images. Figs. 14A to 16B demonstrate that innumerable nanocrystals were confirmed in the particles of Example 6 as in the particles of Example 1. As to the nanocrystals, the inventors consider that several tens of thousands to several billions nano-sized crystals are contained in one particle of Example 6. This is because according to calculation on the assumption that nanocrystals with a diameter as large as 1/100 of the particle diameter are contained at 10% by volume, there are 100,000 crystallites. The distribution of the equivalent circle diameter of crystals in the particles of the positive electrode active material was calculated using AI image analysis DeepCle (ver. 3.3092) produced by Sakai Chemical Industry Co., Ltd. As a result, $D_{10}$ was 3.5 nm, $D_{50}$ was 5.3 nm, and $D_{90}$ was 7.0 nm. In this analysis method, it is demonstrated that 80% of the particles recognized as crystallites (more precisely, nanoparticles) existed in the range of 3.5 nm to 7.0 nm in terms of equivalent circle diameter. The present AI image analysis provides high reproducibility in the analysis of the same image. It is noted that the analysis results differ a little depending on the sharpness of the TEM image. Figs. 16A to 16B demonstrate that also with the particles of Example 6, nanocrystals having a very characteristic twin structure are also included in the nanocrystals in the particles. This observation demonstrates that nanocrystals having a layered structure, nanocrystals having a twin structure, and nanocrystals having a cubic crystal (spinel type or rock salt type structure) coexist in the particles of the positive electrode active material of Example 6.

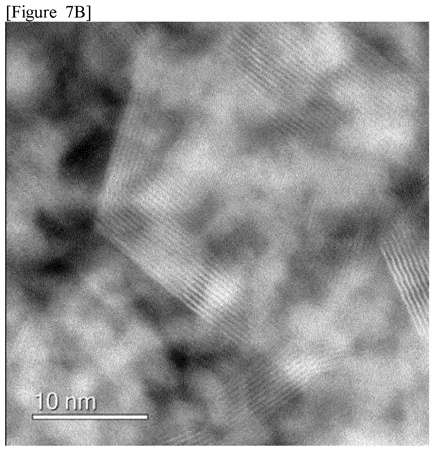

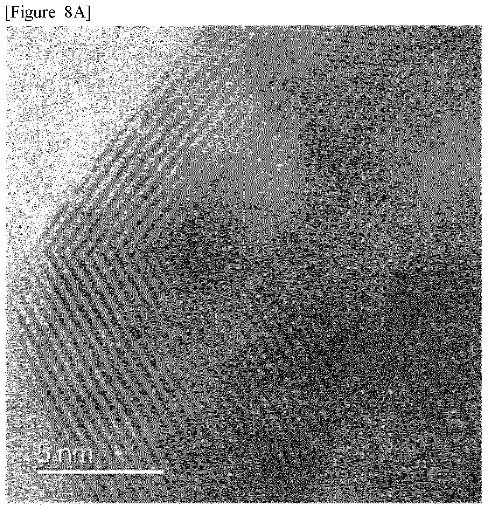

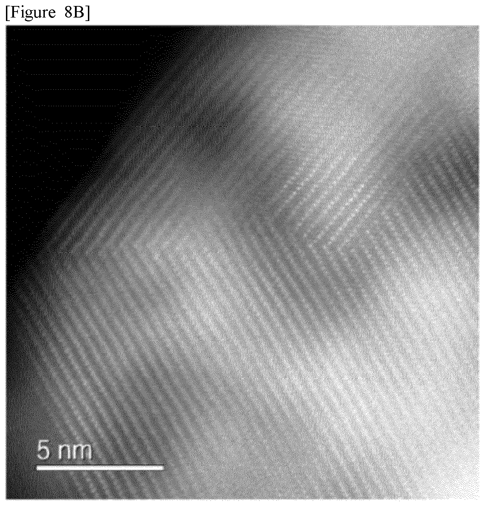

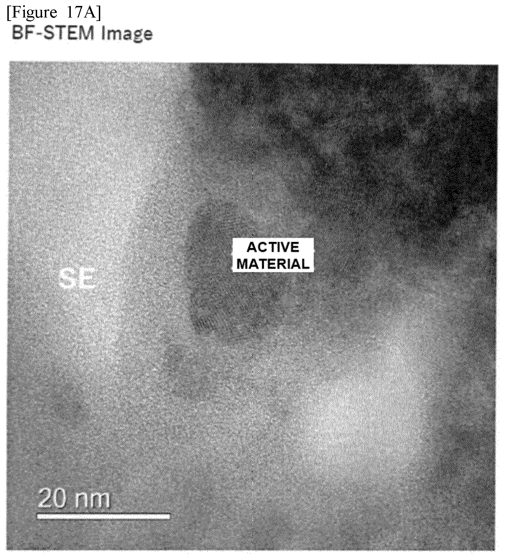

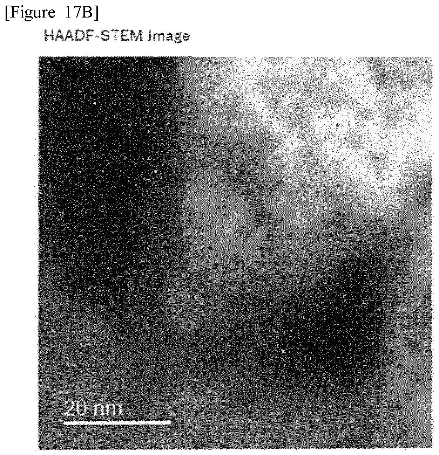

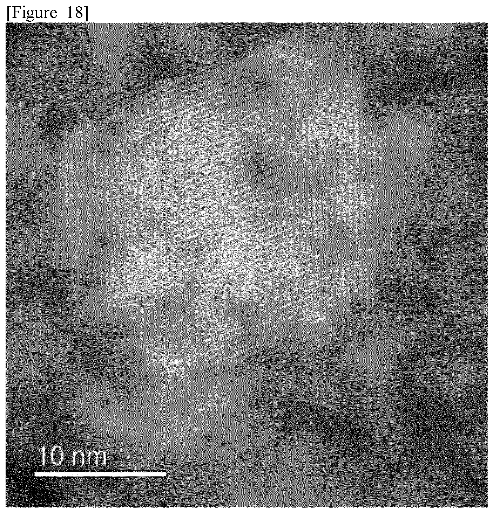

The all-solid-state batteries using the positive electrode active material of Example 6 were subjected to a charge-discharge test. STEM images of the positive electrode active material pellets after the test were taken using a TEM. The images obtained are shown in Figs. 17A, 17B, and 18. Fig. 17A shows a BF-STEM image, and Figs. 17B and 18 show HAADF-STEM images. Figs. 17A, 17B, and 18 demonstrate that a twin structure was also confirmed in the positive electrode active material after the charge-discharge test. The crystal grains having a twin structure also included a characteristic twin structure as shown in Figs. 7 and 8.

(EDS analysis)

The particles of the positive electrode active material of Example 6 were subjected to EDS analysis using an energy dispersive X-ray analysis (EDX) device. As a detector for the EDS analysis, JED-2300 [100 $mm^2$ Silicon Drift Detector (SDD) type] manufactured by JEOL was used. At this time, the acceleration voltage was 200 kV. The beam diameter was about 0.2 nm.

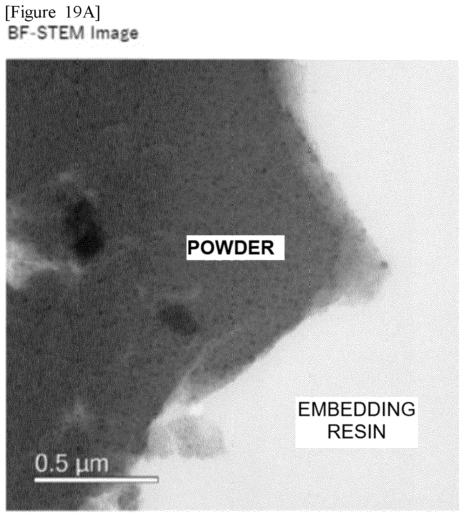

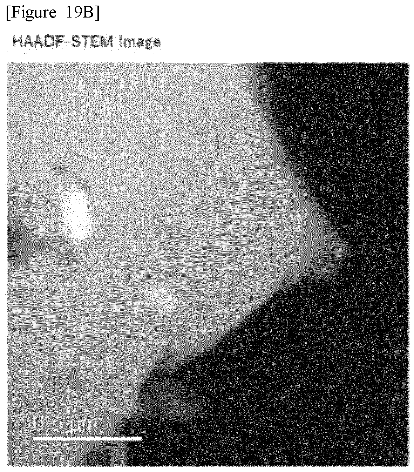

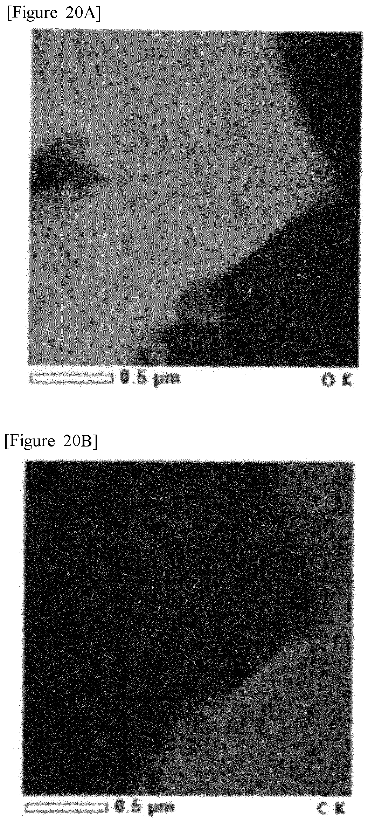

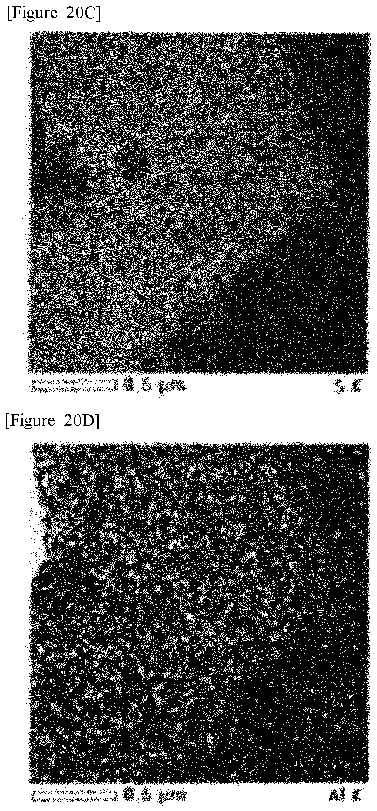

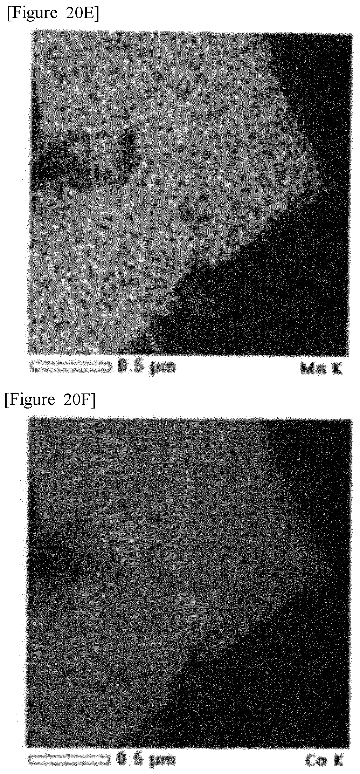

The results of performing EDS analysis on the positive electrode active material of Example 6 are shown in Figs. 20A to 20F. Fig. 20A shows O, Fig. 20B shows C, Fig. 20C shows S, Fig. 20D shows Al, Fig. 20E shows Mn, and Fig. 20F shows Co. Figs. 19A and 19B show an STEM image and an HAADF-STEM image, respectively. Figs. 20A to 20F demonstrate that there is no large bias in the distribution of Co, Mn, O, and S, and Co, Mn, O, and S are uniformly dispersed. These results demonstrate that in the obtained particles, Li, Co, Mn, S, and O were uniformly present in the submicron order, there were innumerable nanocrystals having a crystallite size of 1 to 20 nm, and the particles were glass-ceramic particles having an amorphous matrix. The TEM images of an edge of a particle evidence the presence of several thousand or more nanocrystals, and it is demonstrated that the entire particle contained nanocrystals as many as several thousand or several tens of thousands of times the confirmed nanocrystals. It was suggested that element distribution occurred in a region of several nm to several tens nm.

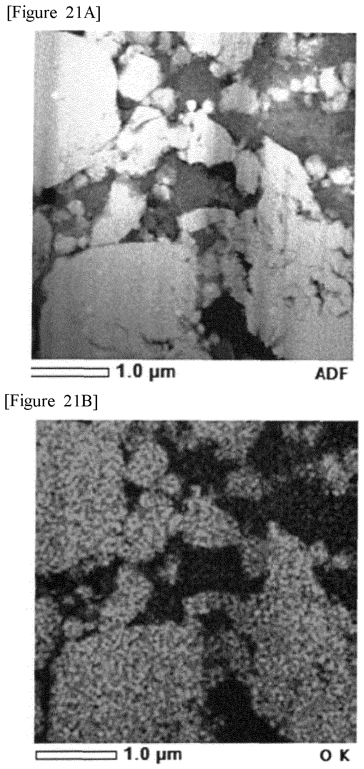

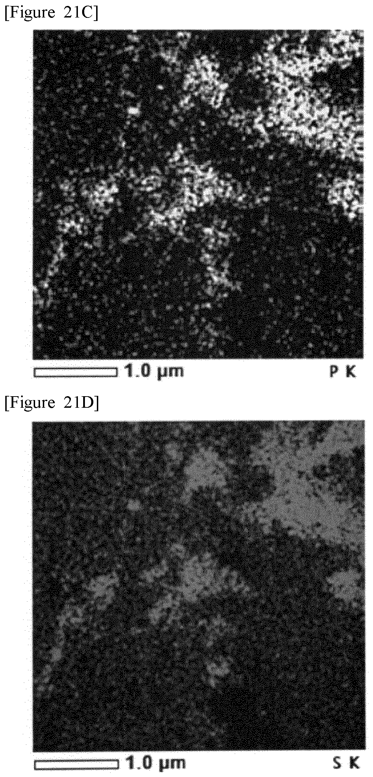

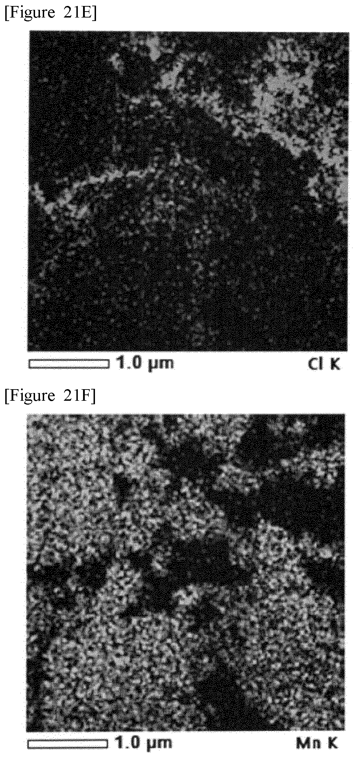

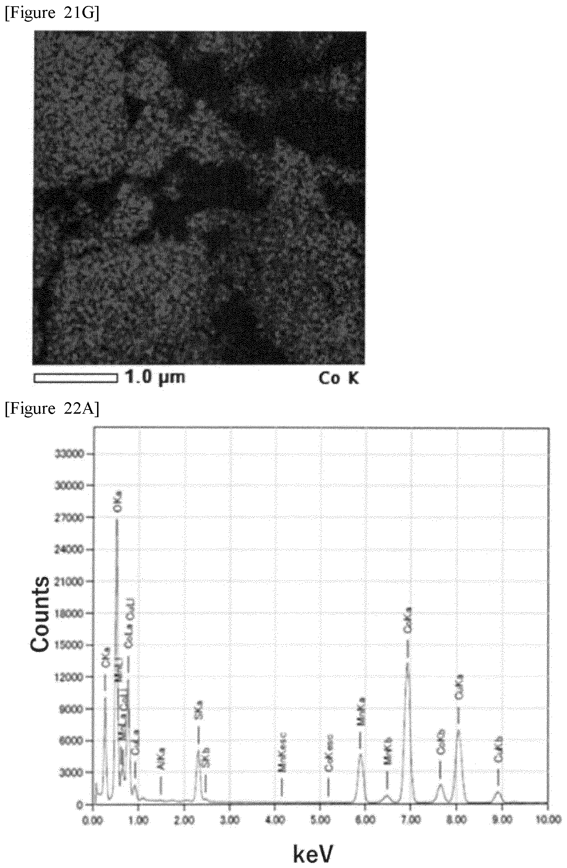

The results of performing STEM-EDS similarly on the pellet of the positive electrode active material of Example 6 are shown in Figs. 21A to 21G. Fig. 21A shows an ADF image, Fig. 21B shows O, Fig. 21C shows P, Fig. 21D shows S, Fig. 21E shows Cl, Fig. 21F shows Mn, and Fig. 21G shows Co. Figs. 21A to 21G demonstrate that there is no bias in the distribution of Co, Mn, O, and S, and these are uniformly dispersed. It is also demonstrated that the positive electrode active material had a glass-ceramic structure also after the charge-discharge test.

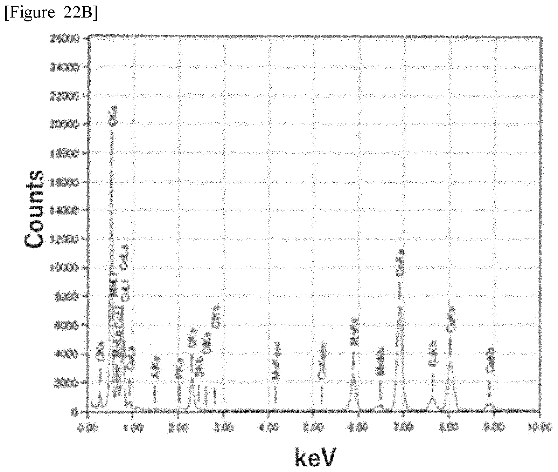

The particles of the positive electrode active material of Example 6 and the positive electrode pellet after the charge-discharge test of the all-solid-state battery using the positive electrode active material of Example 6 were analyzed in the same manner, and the EDX spectra obtained are shown in Figs. 22A and 22B and Tables 5 and 6. Fig. 22A shows the results on the particles, and Fig. 22B shows the results on the positive electrode pellet after the charge-discharge test.

[Table 5]

| Particle | | | | | | |
|---|---|---|---|---|---|---|
| Element | KeV | Counts | % by mass | σ | % by number of atoms | K |
| S K | 2.307 | 42588.68 | 10.12 | 0.08 | 16.9 | 0.6598 |
| Mn K | 5.894 | 68037.49 | 21.7 | 0.14 | 21.15 | 0.8857 |
| Co K | 6.924 | 189361.3 | 68.18 | 0.26 | 61.95 | 1 |
| Total | | | 100 | | 100 | |

[Table 6]

| Pellet after test | | | | | | |
|---|---|---|---|---|---|---|
| Element | KeV | Counts | % by mass | σ | % by number of atoms | K |
| S K | 2.307 | 19548.34 | 8.7 | 0.1 | 14.69 | 0.6598 |
| Mn K | 5.894 | 36345.47 | 21.73 | 0.19 | 21.41 | 0.8857 |
| Co K | 6.924 | 103079.1 | 69.57 | 0.36 | 63.9 | 1 |
| Total | | | 100 | | 100 | |

Figs. 22A and 22B and Tables 5 and 6 demonstrate that the semiquantitative values of S, Mn, and Co were comparable before and after the charge-discharge test.

From the above, it has been demonstrated that the oxide-based positive electrode active material being a glass-ceramic of the present invention has superior charge-discharge characteristics.

**Claims**

1. An oxide-based positive electrode active material being a glass-ceramic comprising Li or Na, at least one transition metal (Groups 3 to 12 of Periods 4 and 5), and an ionic species selected from the group consisting of sulfate ion, silicate ion, aluminate ion, germanate ion, borate ion, nitrate ion, carbonate ion, and halide ion.

2. The oxide-based positive electrode active material according to claim 1, wherein the glass-ceramic is a complex oxide containing the Li or Na, the at least one transition metal, and the ionic species.

3. The oxide-based positive electrode active material according to claim 1 or 2, wherein the glass-ceramic contains a nano-sized crystalline precipitate.

4. An oxide-based positive electrode active material being a glass-ceramic comprising (i) an amorphous composite containing a transition metal (Groups 3 to 12 of Periods 4 and 5) oxide containing Li or Na, and a lithium salt or a sodium salt of an ortho-oxoacid selected from the group consisting of sulfate ion, silicate ion, aluminate ion, germanate ion, borate ion, nitrate ion, carbonate ion, and halide ion; and (ii) a nano-sized crystalline precipitate.

5. The oxide-based positive electrode active material according to claim 4, wherein the crystalline precipitate is a complex oxide containing:

Li or Na;
at least one transition metal (Groups 3 to 12 of Periods 4 and 5); and
an ionic species selected from the group consisting of sulfate ion, silicate ion, aluminate ion, germanate ion, borate ion, nitrate ion, carbonate ion, and halide ion.

6. The oxide-based positive electrode active material according to any one of claims 1 to 5, comprising Li.

7. The oxide-based positive electrode active material according to any one of claims 4 to 6, wherein the lithium salt or the sodium salt of the ortho-oxoacid is contained in an amount of 5% by mass or more and 25% by mass or less based on the complex oxide.

8. The oxide-based positive electrode active material according to any one of claims 1 to 7, wherein the at least one transition metal is selected from the group consisting of Co, Ni, Mn, and Fe.

9. The oxide-based positive electrode active material according to claim 1, 2 or 3 or any one of claims 6 to 8 depending from claim 1, 2 or 3 wherein the ionic species is sulfate ion, or according to claim 4 or 5 or any one of claims 6 to 8 depending from claim 4 or 5 wherein the lithium salt or the sodium salt of the ortho-oxoacid is a lithium salt or a sodium salt of sulfuric acid.

10. The oxide-based positive electrode active material according to claim 7, wherein the oxide-based positive electrode active material is in a form of particles, and a concentration of the sulfate ion or the lithium salt or the sodium salt of sulfuric acid is higher on a surface than in a central portion.

11. The oxide-based positive electrode active material according to any one of claims 3 to 10, wherein the crystalline precipitate has a twin structure.

12. The oxide-based positive electrode active material according to claim 11, wherein a crystal grain size is 50 nm or less in the twin structure.

13. The oxide-based positive electrode active material according to any one of claims 1 to 12, wherein the oxide-based positive electrode active material is for an all-solid-state secondary battery.

14. A positive electrode material comprising:

    a particle of the oxide-based positive electrode active material according to any one of claims 1 to 13; and
    a buffer layer covering at least a part of a surface of the particle, the buffer layer containing a metal oxide having an ionic conductivity higher than an ionic conductivity of the positive electrode active material.

15. An electrode comprising the oxide-based positive electrode active material according to any one of claims 1 to 13 or the positive electrode material according to claim 14.

16. A secondary battery comprising the electrode according to claim 15 as a positive electrode.

17. The secondary battery according to claim 16, wherein the secondary battery is an all-solid-state secondary battery.

18. The secondary battery according to claim 17, comprising an argyrodite-type sulfide electrolyte as a solid electrolyte.

19. A method for producing the oxide-based positive electrode active material according to any one of claims 1 to 13, the method comprising a step of crystallizing a part of an amorphous composite containing Li or Na, at least one transition metal, and an ionic species selected from the group consisting of sulfate ion, silicate ion, aluminate ion, germanate ion, borate ion, nitrate ion, carbonate ion, and halide ion.

[Figure 1]

MOLDING PRESSURE: 720 MPa

OXIDE-BASED POSITIVE ELECTRODE ACTIVE MATERIAL

SOLID ELECTROLYTE

In FOIL

Li FOIL

[Figure 2A]

[Figure 2B]

[Figure 2C]

[Figure 3]

[Figure 4]

[Figure 5A]

[Figure 5B]

[Figure 5C]

[Figure 5D]

[Figure 5E]

[Figure 6A]

[Figure 6B]

[Figure 7A]

[Figure 7B]

[Figure 8A]

[Figure 8B]

EP 4 439 725 A1

[Figure 9A]

43

[Figure 9B]

[Figure 9C]

**EXAMPLE 8**

400°C 30min

[Figure 9D]

[Figure 9E]

[Figure 9F]

[Figure 10A]

[Figure 10B]

[Figure 10C]

[Figure 11A]

[Figure 11B]

[Figure 12A]

EXAMPLE 6

LCMSO(60:20:20)HT400°C 1h
cut off 4.4V

0.2C

[Figure 12B]

EXAMPLE 10

[Figure 12C]

EXAMPLE 11

[Figure 12D]

EXAMPLE 16

[Figure 13]

[Figure 14A]

[Figure 14B]

[Figure 15A]

BF-STEM Image

POWDER

20 nm

[Figure 15B]

HAADF-STEM Image

20 nm

[Figure 16A]
BF-STEM Image

[Figure 16B]

HAADF-STEM Image

10 nm

[Figure 17A]
BF-STEM Image

[Figure 17B]

HAADF-STEM Image

20 nm

[Figure 18]

[Figure 19A]

BF-STEM Image

POWDER

EMBEDDING RESIN

0.5 μm

[Figure 19B]

HAADF-STEM Image

0.5 μm

[Figure 20A]

[Figure 20B]

[Figure 20C]

0.5 μm                    S K

[Figure 20D]

0.5 μm                    Al K

[Figure 20E]

0.5 μm       Mn K

[Figure 20F]

0.5 μm       Co K

[Figure 21A]

1.0 µm                    ADF

[Figure 21B]

1.0 µm                    O K

[Figure 21C]

1.0 μm      P K

[Figure 21D]

1.0 μm      S K

[Figure 21E]

1.0 μm    Cl K

[Figure 21F]

1.0 μm    Mn K

[Figure 21G]

1.0 μm      Co K

[Figure 22A]

[Figure 22B]

## INTERNATIONAL SEARCH REPORT

| International application No. |
| --- |
| **PCT/JP2022/043612** |

| A. | CLASSIFICATION OF SUBJECT MATTER |
| --- | --- |

$H01M$ $4/525$(2010.01)i; $H01M$ $4/36$(2006.01)i; $H01M$ $4/505$(2010.01)i; $H01M$ $10/052$(2010.01)i; $H01M$ $10/054$(2010.01)i; $H01M$ $10/0562$(2010.01)i

FI: H01M4/525; H01M4/36 A; H01M4/505; H01M4/36 C; H01M10/0562; H01M10/052; H01M10/054

According to International Patent Classification (IPC) or to both national classification and IPC

| B. | FIELDS SEARCHED |
| --- | --- |

Minimum documentation searched (classification system followed by classification symbols)

H01M4/525; H01M4/36; H01M4/505; H01M10/052; H01M10/054; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2007-042618 A (KITAKYUSHU FOUNDATION FOR THE ADVANCEMENT OF INDUSTRY SCIENCE & TECHNOLOGY et al.) 15 February 2007 (2007-02-15) | 1-19 |
| A | JP 2009-016277 A (TOYOTA MOTOR CORP et al.) 22 January 2009 (2009-01-22) | 1-19 |
| A | JP 2014-500597 A (RAMOT AT TEL AVIV UNIVERSITY, LTD) 09 January 2014 (2014-01-09) | 1-19 |
| A | JP 2014-534592 A (I-TEN) 18 December 2014 (2014-12-18) | 1-19 |
| A | WO 2017/169599 A1 (UNIV OSAKA PREFECT PUBLIC CORP) 05 October 2017 (2017-10-05) | 1-19 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 February 2023** | **14 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| | International application No. |
|---|---|
| | **PCT/JP2022/043612** |

**C.    DOCUMENTS CONSIDERED TO BE RELEVANT**

| Category* | Citation of document, with indication, where appropriate, of the relevant passages | Relevant to claim No. |
|---|---|---|
| A | JP 2004-259524 A (SANYO ELECTRIC CO LTD) 16 September 2004 (2004-09-16) | 1-19 |

Form PCT/ISA/210 (second sheet) (January 2015)

INTERNATIONAL SEARCH REPORT
Information on patent family members

International application No.

**PCT/JP2022/043612**

| Patent document cited in search report | | | Publication date (day/month/year) | Patent family member(s) | | | Publication date (day/month/year) |
|---|---|---|---|---|---|---|---|
| JP | 2007-042618 | A | 15 February 2007 | (Family: none) | | | |
| JP | 2009-016277 | A | 22 January 2009 | (Family: none) | | | |
| JP | 2014-500597 | A | 09 January 2014 | WO | 2012/076950 | A1 | |
| | | | | US | 2013/0244102 | A1 | |
| JP | 2014-534592 | A | 18 December 2014 | US | 2014/0308576 | A1 | |
| | | | | WO | 2013/064779 | A1 | |
| | | | | WO | 2013/064781 | A1 | |
| | | | | CN | 103947015 | A | |
| | | | | KR | 10-2014-0096332 | A | |
| WO | 2017/169599 | A1 | 05 October 2017 | US | 2019/0181446 | A1 | |
| | | | | EP | 3439083 | A1 | |
| | | | | CN | 108886145 | A | |
| JP | 2004-259524 | A | 16 September 2004 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017169599 A